# EUROPEAN PATENT SPECIFICATION

(11) **EP 4 452 582 B1**
(45) Date of publication and mention of the grant of the patent: **11.02.2026**
(21) Application number: 22839218.9
(22) Date of filing: 14.12.2022
(51) Int. Cl.: B27N 1/00, B27N 3/00, B27N 3/02, B27N 3/04, B27N 3/18, C08L 97/02, B27N 3/20

(54) **PROCESS OF PRODUCING A LIGNOCELLULOSIC COMPOSITE OR A PRODUCT THEREOF USING DIELECTRIC HEATING**
VERFAHREN ZUR HERSTELLUNG EINES LIGNOCELLULOSEVERBUNDES ODER EINES PRODUKTS DAVON UNTER VERWENDUNG VON DIELEKTRISCHER ERWÄRMUNG
PROCÉDÉ DE PRODUCTION D'UN COMPOSITE LIGNOCELLULOSIQUE OU D'UN PRODUIT ASSOCIÉ À L'AIDE D'UN CHAUFFAGE DIÉLECTRIQUE

(30) Priority: 22.12.2021 EP 21217188
(43) Date of publication of application: 30.10.2024
(73) Proprietor: BASF SE, 67056 Ludwigshafen am Rhein (DE)
(72) Inventor: WEINKÖTZ, Stephan, 67056 Ludwigshafen (DE); SOMMER, Gereon Antonius, 67056 Ludwigshafen (DE)
(74) Representative: BASF IP Association
(86) International application number: PCT/EP2022/085963
(87) International publication number: WO 2023/117648

(56) References cited:
- EP-A2- 2 137 223
- EP-B1- 2 885 116
- WO-A1-2011/138458
- US-A1- 2018 071 945

## Description

The present invention relates to a process of producing a lignocellulosic composite.

The invention is defined in the claims as attached.

More specifically, the present invention according to a first aspect relates to a process of producing a lignocellulosic composite or a product thereof as a part of a continuous production of lignocellulosic composites, wherein a heat-curable binder composition is used comprising as components for hardening the binder via reaction with each other at least one, two or more carbohydrate compounds and one or two compounds having two or more amino groups, comprising hexamethylenediamine and/or polylysine. According to this first aspect of the invention a mixture comprising lignocellulosic particles and said heat-curable binder composition is prepared, and a sheet is formed from said mixture. In a dielectric heating and pressing unit, the resulting formed sheet is at least temporarily simultaneously compacted and dielectrically heated so that the heat-curable binder composition hardens and the lignocellulosic composite results. Preferred embodiments of this process are defined in the claims and described hereinafter.

In specific processes of producing lignocellulosic composites, a mixture of lignocellulosic particles (i.e. particles consisting essentially of lignocellulose) and a binder is provided or prepared. This mixture is typically formed into a sheet. The resulting sheet is then compacted and heated in a manner so that the binder undergoes a hardening process.

The following documents relate to specific features or details of the present invention:
WO 2013/150123 A1, US 2016/0304705 A1, WO 2017/207355 A1, and EP 3 359 360 B1 disclose binder compositions based on carbohydrate or carbohydrate-based compounds in combination with nitrogen containing compounds.

WO 2013/150123 A1 discloses a water-soluble pre-reacted binder composition, comprising the reaction product(s) of (i) at least one carbohydrate component, and (ii) at least one nitrogen-containing component.

US 2016/0304705 A1 discloses a curable carbohydrate binder composition comprising: a carbohydrate; a urea compound; and a nitrogen-containing compound, wherein the nitrogen containing compound does not comprise the urea compound.

WO 2017/207355 A1 discloses the use of an amine compound comprising at least one, preferably at least two amine functions, wherein the amine functions are primary or secondary amines, to reduce the level of furfural and/or hydroxymethylfurfural in a carbohydrate-based binder or binder composition and/or escaping in the course of preparation, cross-linking and/or curing of carbohydrate-based binders. Preferably, the carbohydrate-based binder is obtained from a carbohydrate-based binder composition comprising a carbohydrate component and a cross-linker and possibly a reaction product of carbohydrate component and cross-linker, wherein the cross-linker is selected from ammonium salts of inorganic acid, carboxylic acids, salts, ester or anhydride derivatives thereof, and/or combinations thereof.

EP 3 359 360 B1 discloses a multi-layer particle board comprising at least one core layer and a surface layer, the surface layer particles being bonded by a binder comprising carbohydrate based reaction products and the core layer particles being bonded by a binder other than the carbohydrate based binder resin used in the surface layer, wherein the binder comprising carbohydrate based reaction product comprises: reaction products of a reducing sugar and a nitrogen source.

US 2018/0071945 A1 discloses a method for producing single- or multi-layer lignocellulose materials using trialkyl phosphate.

EP 2 137 223 A2 discloses composite Maillard-resole binders to produce or promote cohesion in non-assembled or loosely assembled matter.

WO 2011/138 preparable A1 discloses a binder formulation and materials made therewith comprising a carbohydrate-based binder and a method for preparing the same.

In the technical field of producing lignocellulosic composites, processes known in the state of the art using binders based on carbohydrate compounds typically employ harsh reaction conditions, i.e. typically conductional heating with press plates in a so-called hot press or heated press at high temperatures and long heating periods. Furthermore, these processes require several curing steps in order to harden the binder. As such, carbohydrate based binder systems are considered as challenging materials and are only rarely used in manufacturing processes of making lignocellulosic composites, although carbohydrates can be obtained from natural resources, and are classified as "bio based" and therefore environmentally friendly raw materials.

One multi-step hardening process employing rather harsh reaction conditions is disclosed in EP 2885116 B1. This document discloses a process for manufacturing wood board, comprising the steps: (a) providing wood pieces; (b) applying a carbohydrate binder composition to the wood pieces provided in step (a); (c) forming the wood pieces obtained in step (b) into a sheet; (d) heating and pressing the sheet obtained in step (c) to obtain a cured wood board; and (e) post-curing the wood board obtained in step (d).

EP 2885116 B1 is understood to disclose that post-curing, i.e. a second hardening step, is employed to transform carbohydrates (sugars) which have not been transformed during initial curing, i.e. a first hardening step. Initial curing is performed using conductional heating with press plates at high temperatures and long heating periods. However, even these harsh conditions are considered as not sufficient to react all carbohydrate compounds and to sufficiently harden the binder. From the perspective of the skilled person, quantitative reaction of carbohydrates (sugars) is necessary, as free and unreacted carbohydrates (sugars) would pose a potentially detrimental effect regarding bacterial growth and may negatively contribute to the strength and/or other mechanical properties of the binder and the resulting lignocellulosic composite. This is in particular the case with binder systems comprising carbohydrates (sugars) and amines as reactive components.

The present inventors have considered that initial curing, i.e. heating the sheet with press plates at high temperatures above 190 °C and long heating periods of 140 seconds, has at least three main disadvantages. Firstly, conductional heat transfer appears economically and energetically inefficient, because the sheet is unevenly heated from the surface to the core, and reaction temperatures required for hardening the binder in the core of the sheet are only reached at the very end of long heating periods. Secondly, the surface of the sheet is constantly exposed to the hot press plates, which many times leads to detrimental effects such as burning defects or a very dark colour of the surface. Thirdly, the resulting (intermediate) composite features a strong density deviation within the lignocellulosic composite (low density in the core region and high density in the surface region) and inhomogeneous material characteristics, i.e. fully hardened binder in the surface region and only partially reacted carbohydrate compounds in the core region.

The multi-step hardening process according to EP 2885116 B1 has several disadvantages. Firstly, multiple expensive reaction units must be provided, i.e. at least one hot press unit and at least one post-curing unit. This is economically unattractive and logistically challenging. Secondly, all of the multiple reaction steps require long reaction times, so that the overall manufacturing process is time-consuming. Moreover, it is difficult to ensure high-quality reaction products, i.e. lignocellulosic composites and the (hardened) binder composition therein, with reliable and constant properties in a multi-step hardening process.

There is a demand in industry for an improved process of producing lignocellulosic composites, wherein preferably the binder comprises "bio based" carbohydrate compounds as environmentally friendly raw materials. Preferably, this improved process should allow for an effective one-step hardening of the binder under relatively mild reaction conditions, and should ideally lead to improved properties of the resulting lignocellulosic composites.

Thus, it was a primary object of the present invention to provide for an improved process of producing lignocellulosic composites using binder systems comprising carbohydrate compounds. The improved process should preferably include an effective and mild one-step hardening of the (heat-curable) binder. It was a related object of the present invention to reduce the complexity of the production facilities by providing a process protocol that requires only a single production unit for compacting a formed sheet and for curing the binder composition present within the formed sheet.

The present invention in its interrelated categories relates to
- a process of producing a lignocellulosic composite.

In accordance with the primary object of the invention as stated above, the present invention relates to a process of producing a lignocellulosic composite or a product thereof, comprising at least the following steps:
a) making a formed sheet by
   (a-i) preparing a mixture comprising
      (i) lignocellulosic particles
         and
      (ii) a heat-curable binder composition comprising as components for hardening the binder via reaction with each other at least
         (ii-a) one, two or more carbohydrate compounds
            and
         (ii-b) one or two compounds having two or more amino groups, comprising hexamethylenediamine and/or polylysine
      and
   (a-ii) forming a sheet from said mixture obtained in step (a-i),
   so that the formed sheet results, wherein the formed sheet preferably has a predetermined shape,
b) in a dielectric heating and pressing unit, at least temporarily simultaneously compacting and dielectrically heating (preferably by applying a high frequency electrical field) the formed sheet as resulting in step a) so that the heat-curable binder composition hardens and the lignocellulosic composite results, wherein the resulting lignocellulosic composite preferably has a predetermined shape and/or predetermined mechanical properties,
wherein producing the lignocellulosic composite is part of a continuous production of lignocellulosic composites.

Herein, and throughout the present text, the term "lignocellulosic particles" designates and includes any type, size and shape of lignocellulosic particles, such as fibres, chips, strands, flakes, sawmill shavings and saw dust, and mixtures thereof. In addition, any type of lignocellulosic biomass can be used as a source for said lignocellulosic particles. Mixtures of different types of lignocellulosic particles can be used in the production of a lignocellulosic composite. E.g., lignocellulosic particles from both virgin wood and/or waste wood, such as old furniture, can be used to produce the lignocellulosic composite of the present invention.

Herein, and throughout the present text, the term "heat-curable binder composition" designates binder compositions comprising reactive compounds, which will be reacting with each other when heated so that the binder composition hardens. Relevant hardening reactions include the formation of new chemical bonds by conversion of the functional groups of the binder components. According to the present invention a heat-curable binder composition is employed comprising as components for hardening the binder via reaction with each other at least (ii-a) one, two or more carbohydrate compounds, and (ii-b) one or two compounds having two or more amino groups, comprising hexamethylenediamine and/or polylysine. When such a binder composition is heated to a sufficient temperature chemical reactions take place at a sufficient rate involving in particular the reaction of functional groups of the carbohydrate compounds (e.g. carbonyl groups of reducing sugars) with amino groups of the respective compounds also present in the binder. By such chemical reactions the heat-curable binder composition hardens.

In contrast to conventional urea formaldehyde binders widely employed in lignocellulosic manufacturing processes, the heat-curable binder composition used in the process of the present invention is preferably free of formaldehyde. In corresponding embodiments of the process of the invention detrimental effects are avoided which are associated with the use and/or emissions of formaldehyde.

Herein, and throughout the present text, the term "carbohydrate compound" designates any carbohydrate compounds, which are capable of reacting with amine compounds, and optionally further crosslinkers, in order to form a hardened binder. According to the present invention, the carbohydrate compounds may be selected from the group consisting of monosaccharides, disaccharides, polysaccharides or a carbohydrate reaction product thereof. The carbohydrate compounds may comprise at least one reducing sugar.

The term "reducing sugar" indicates one or more sugars that contain aldehyde groups, or that can isomerize, i.e. tautomerize, to contain aldehyde groups.

Specifically, monosaccharides, disaccharides, or polysaccharides may be (partially) reacted with a precursor to form a carbohydrate reaction product. Such "carbohydrate reaction product" is included in the generic term "carbohydrate compounds".

For use in the heat-curable binder composition in component (ii-a) such carbohydrate compound(s) must be capable of reacting with the compound(s) having two or more amino groups employed in component (ii-b).

Herein, and throughout the present text, the term "compound having two or more amino groups" (also called "amine co-reactant") designates any chemical compound containing at least two amino groups, be it a primary or secondary group in each case. For use in the heat-curable binder composition in component (ii-b) such compound must be capable of reacting with the carbohydrate compound(s) employed in component (ii-a). Preferably, one, two or more of the amino groups of the compound having two or more amino groups are primary amino groups.

Herein, and throughout the present text, the term "formed sheet" (as resulting from step (a-ii)) designates a three-dimensional material mixture comprising lignocellulosic particles and a heat-curable binder composition as defined above. In contrast to the situation in the lignocellulosic composite resulting from step b) of the process of the invention, in the formed sheet the lignocellulosic particles are not finally bound by a hardened binder (but formed into a typically predetermined three-dimensional shape). As such the formed sheet can be considered as an intermediate.

Herein, and throughout the present text, the term "dielectric heating and pressing unit" designates a unit (as part of a production plant) comprising means for (at least temporarily simultaneously) pressing (compacting, e.g. with press plates) and dielectrically heating (e.g. with a generator for a high-frequency electrical field) a formed sheet as resulting from step (a-ii). A none limiting example of such a "dielectric heating and pressing unit" is the HLOP 170 press from Hoefer Presstechnik GmbH. The presence of means for simultaneous dielectric heating is the main difference compared to a conventional "hot press" or "heated press" (e.g. the hot press Lab Econ 600 by Fontjine), which does not possess any kind of radiation source and is thus not a "dielectric heating and pressing unit".

Herein, and throughout the present text, the term "dielectrically heating" designates a process in which a high frequency electrical field, a radio frequency (RF) alternating electric field, or radio wave or microwave electromagnetic radiation or any other kind of electromagnetic radiation is applied for heating a dielectric material such as the heat-curable binder or the mixture comprising lignocellulosic particles and a heat-curable binder composition respectively. In contrast to heat transfer by conduction or convection the energy is transferred to the material by any kind of suitable electromagnetic radiation. A direct contact of the heating means with the (dielectric) material to be heated is thus not necessarily required.

Herein, and throughout the present text, the term "harden" or "hardening" designates a chemical transformation of the heat-curable binder composition by reaction of the reactive components of the binder. The hardening leads to the formation of a binder network in which the reacted binder components are covalently linked and bind the lignocellulosic particles.

Herein, and throughout the present text, the term "lignocellulosic composite" (as resulting in step b)) of the process of the present invention) designates any composite material, which contains lignocellulosic particles and a hardened binder that binds the lignocellulosic particles. Said lignocellulosic composite can be of any (preferably predetermined) shape such as rectangular, square, round, triangular and the like; and may also be of any thickness, density and colour.

In specific preferred embodiments, the lignocellulosic composite may be a "single-layer" lignocellulosic composite, wherein the term "single-layer" specifies that the lignocellulosic composite comprises only one layer of lignocellulosic material and binder, wherein the single layer preferably is produced in a process of the present invention comprising a single step of scattering lignocellulosic particles as part of step a).

Alternatively, in other specific embodiments, the lignocellulosic composite is a "multilayer" lignocellulosic composite. The term "multilayer lignocellulosic composite" used herein designates and includes any multilayered composite, which contains lignocellulosic particles and a hardened binder that binds the lignocellulosic particles, and wherein distinguishable (individual) layers are present within the composite.

A multilayer lignocellulosic composite preferably comprises at least two distinguishable (individual) layers, preferably at least a core layer and an upper and a lower surface layer, or four or more layers within the same composite material. The adjacent layers of the multi-layer lignocellulosic composite are distinguishable in terms of their composition, density, colour or any other properties. In a process of the present invention they are preferably prepared in separate steps and/or using different mixtures comprising lignocellulosic particles and heat-curable binder composition. The adjacent layers comprise identical types of lignocellulosic particles and/or binders or different types of lignocellulosic particles and/or binders. The (individual) layers may also comprise or consist of different materials than lignocellulosic particles and/or binders, such as plastics, fabrics, paint coat or the like, for examples derived from foreign matter in waste wood.

The lignocellulosic particles used in the production of an individual layer of a "multilayer lignocellulosic composite" are of the same type or of different types of lignocellulosic biomass. The lignocellulosic particles used in the production of separate (individual) layers of a "multilayer lignocellulosic composite" are of the same type or of different types of lignocellulosic biomass or are identical or different mixtures of two or more of such types of lignocellulosic biomass.

Furthermore, the term "multilayer" specifies that the lignocellulosic composite comprises at least two individual layers, wherein at least one, preferably two or more of these individual layers comprise lignocellulosic material and binder, wherein preferably one or more or all of said layers are produced in a multi-step process comprising for each (individual) layer of lignocellulosic material and binder a step of scattering lignocellulosic particles.

Herein, and throughout the present text, the term "continuous production" has the usual meaning in the art and therefore comprises semi-continuous production processes, wherein specific steps are conducted periodically. A continuous production usually requires a series of discrete unit operations, with the output of one step being the input for the next step. For example, in the continuous production according to the present invention in one step a formed sheet is made by preparing a mixture comprising (i) lignocellulosic particles and (ii) a heat-curable binder composition and by forming (in a forming unit) a sheet from said mixture. Said formed sheet constitutes the input for the next step of at least temporarily simultaneously compacting and dielectrically heating the formed sheet (in a dielectric heating and pressing unit) so that the heat-curable binder composition hardens and the lignocellulosic composite results. Thus, the lignocellulosic composite, is produced in a continuous process starting from said mixture comprising (i) lignocellulosic particles and (ii) a heat-curable binder composition.

Preferably, between process step (a-ii) and process step b) the formed sheet is transported by means of a conveyor belt.

Preferably, in continuous production,
- in process step a) the mixture is (at least temporarily) transported by means of a conveyor belt
   and/or
- in process step b) the formed sheet is (at least temporarily) transported by means of a conveyor belt, preferably a conveyor belt that is part of a double belt press (see the definition below).

Surprisingly and contrary to the prevailing view on carbohydrate based binder systems the inventors have found a simple and effective method for hardening a heat-curable binder composition comprising as components for hardening the binder via reaction with each other at least one, two or more carbohydrate compounds and one or two compounds having two or more amino groups, comprising hexamethylenediamine and/or polylysine.

This simple and effective method in particular comprises the hardening step b), which is carried out in a dielectric heating and pressing unit and comprises at least temporarily simultaneously compacting and dielectrically heating the formed sheet as resulting in step a). By dielectrically heating (and at least temporarily simultaneously compacting) the formed sheet in step b) the reactive components of the heat-curable binder composition are caused to react with each other and thus harden the binder so that the lignocellulosic composite results.

It is a major advantage of the process according to the present invention that only one hardening (or curing) step is required and no post-hardening (or post-curing) in a separate unit is required. In other words: the process according to the present invention allows for an efficient production of a lignocellulosic composite as a part of a continuous production of lignocellulosic composites without interrupting the process for several different curing steps in several different process (curing) units.

It is another major advantage that the hardening process is initiated or at least supported by electromagnetic radiation, i.e. dielectric heating, and insofar does not need conductional heating with press plates at very high temperatures. The dielectric heating allows for a homogeneous and rapid heating of all regions/areas of the formed (and compacted) sheet, i.e. allows for simultaneously increasing the temperature at the center of the sheet and at the surface of the sheet immediately when starting the dielectric heating.

The process according to the present invention is characterized by at least temporarily simultaneously compacting and dielectrically heating the formed sheet as resulting in step
a). Preferably, during step b) the formed sheet is
   i) compacted first without dielectric heating for a certain period of time, preferably for a time period in the range of from 1 to 10 s, followed by simultaneously compacting and dielectrically heating,
      or
   ii) compacted and dielectrically heated for the same period of time, i.e. with the same start time and the same stop time.

Also preferred is a process of the present invention wherein in step b) two or more time periods of dielectrically heating the formed sheet are interrupted by time periods wherein no dielectric heating is conducted. The time period(s) of interruption are preferably in the range of from 0.1 sec to 10 min, preferably 0.1 sec to 60 sec, more preferably 0.1 sec to 10 sec.

Furthermore, also and additionally preferred is a process of the present invention wherein before removing the resulting lignocellulosic composite from the dielectric heating and pressing unit the following sequence of steps is conducted: (i) simultaneously compacting and dielectrically heating the formed sheet, followed by (ii) compacting the formed sheet without dielectrically heating the formed sheet, followed by opening the dielectric heating and pressing unit so that the lignocellulosic composite can be removed therefrom.

In a process of the present invention producing the lignocellulosic composite is part of a continuous production of lignocellulosic composites. In such a continuous production it is sometimes preferred to transfer a formed sheet in step b) from a first dielectric heating and pressing unit to a second dielectric heating and pressing unit. During such transfer dielectric heating is typically interrupted.

Preferred is a process of the present invention, wherein the lignocellulosic composite is a multilayer lignocellulosic board comprising at least two distinguishable layers.

The multilayer lignocellulosic board is preferably a board having at least a core layer as well as an upper surface layer and a lower surface layer, the total number of layers is then three or more. More preferably, at least a core layer of the multilayer lignocellulosic board comprises a heat-curable binder composition comprising as components for hardening the binder via reaction with each other at least (ii-a) one, two or more carbohydrate compounds and (ii-b) one or two compounds having two or more amino groups, comprising hexamethylenediamine and/or polylysine.

The multilayer lignocellulosic board is more preferably a three-layer board having one core layer, an upper surface layer and a lower surface layer, wherein preferably at least the core layer comprises a heat-curable binder composition comprising as components for hardening the binder via reaction with each other at least (ii-a) one, two or more carbohydrate compounds and (ii-b) one or two compounds having two or more amino groups, comprising hexamethylenediamine and/or polylysine.

Preferred is a process of the present invention (preferably a process as defined herein above as being preferred), wherein the process comprises one or both of the following steps:
- continuously making a formed sheet according to step a), preferably by continuously scattering lignocellulosic particles and mixing said particles with a heat-curable binder composition
   and
- continuously at least temporarily simultaneously compacting and dielectrically heating the formed sheet as resulting in step a) so that the heat-curable binder composition hardens and the lignocellulosic composite results.

It is thus preferred that the individual steps (discrete unit operations) according to the process of the present invention are conducted continuously in themselves. It is accordingly preferred that a formed (yet uncured) sheet is continuously made according to step a) and continuously fed (as input) into the process step of (in a dielectric heating and pressing unit) continuously at least temporarily simultaneously compacting and dielectrically heating (curing) the formed sheet as resulting in step a) so that the heat-curable binder composition hardens and the lignocellulosic composite results. This preferred process hence allows for an advantageous continuous production of lignocellulosic composites.

Preferred is a process of the present invention (preferably a process as defined herein above as being preferred), wherein the formed sheet as resulting in step a) is
- introduced into the dielectric heating and pressing unit employed in step b) in less than 1 minute after termination of step a), preferably in less than 30 seconds, more preferably in less than 10 seconds,
   and/or (preferably "and")
- subjected to at least temporarily simultaneously compacting and dielectrically heating so that the heat-curable binder composition hardens and the lignocellulosic composite results, wherein the time period between termination of step a) and the start of at least temporarily simultaneously compacting and dielectrically heating is less than 3 minutes, preferably less than 1 minute, more preferably less than 30 seconds, even more preferably less than 10 seconds.

In a continuous process "termination of step a)" means that the formed sheet as a result of step a) is fully prepared so that the formed sheet exits (as output) the forming unit used in step a).

In particular, in continuous processes in order to allow for the preferred quick transfer from step a) to step b) the spatial distance between the forming unit used in step (a-ii) and the dielectric heating and pressing unit used in step b) should be short. Preferably the spatial distance between the forming unit used in step a-ii) and the dielectric heating and pressing unit used in step b) is below 20 m, preferably below 10 m, more preferably below 5 m.

In some cases it is particularly preferred that the forming unit used in step (a-ii) and the dielectric heating and pressing unit used in step b) are spatially connected, i.e. there is no spatial distance or a spatial distance of at most 10 cm between the forming unit used in step (a-ii) and the dielectric heating and pressing unit used in step b). This is in particular the case, if between process step (a-ii) and process step b) the formed sheet is transported by means of a conveyor belt.

Preferably, the process of the present invention (preferably a process as defined herein above as being preferred) is at least partially conducted in a double belt press.

More preferably the process steps
(a-ii) forming a sheet from said mixture obtained in step (a-i), so that the formed sheet results,
   and preferably also
b) in a dielectric heating and pressing unit, at least temporarily simultaneously compacting and dielectrically heating the formed sheet as resulting in step a) so that the heat-curable binder composition hardens and the lignocellulosic composite results,
are conducted in a double belt press.

Herein, and throughout the present text, the term "double belt press" is known in the art and designates a forming/compacting/pressing means/unit, wherein two pressing belts are continuously driven by rollers. The two pressing belts delimit an area for conducting through or transporting through a mixture prepared according to step (a-i) and/or a formed sheet comprising lignocellulosic particles and a heat-curable binder composition according to step (a-ii). The delimiting areas and the two pressing belts are preferably designed such that they exert a pressure on the mixture prepared according to step (a-i) and/or the formed sheet comprising lignocellulosic particles and a heat-curable binder composition according to step (a-ii). Hence, the double belt press is a means for forming the mixture prepared according to step (a-i), i.e. a forming unit for forming a sheet from said mixture obtained in step (a-i), so that the formed sheet results. And preferably the double belt press is also a means for compacting the formed sheet as resulting in step a).

Preferably, the double belt press for compacting the formed sheet as resulting in step a) comprises a dielectric heating unit for dielectrically heating the formed sheet as resulting in step a) so that the heat-curable binder composition hardens and the lignocellulosic composite results according to process step b) of the present invention. Said unit for dielectrically heating the formed sheet in a double belt press preferably comprises a pair of capacitor plates, which are arranged behind the pressing belts. The formed sheet as resulting in step a) is thus conducted or transported through a pair of capacitor plates, with one upper pressing belt being disposed between the formed sheet and the upper capacitor plate, and one lower pressing belt disposed between the formed sheet and the lower capacitor plate. One of the two capacitor plates may be grounded, causing dielectrically heating by a high-frequency electrical field according to the principle of asymmetrical feeding.

In a process of the present invention, in step a) and also in step b) before dielectrically heating the formed sheet the maximum temperature within the heat-curable binder composition is below 80 °C. According to this aspect of the present invention, step a) of making a formed sheet is limited to maximum temperatures so that the heat-curable binder typically does not undergo hardening during step a). Heat (thermal energy) might still be transferred to the heat-curable binder and/or the mixture consisting of lignocellulosic particles and a heat-curable binder composition, but due to the maximum temperature restriction only in a limited amount.

Heat transfer during step a) (although limited according to preferred embodiments) may facilitate or support:
- mixing and/or homogenisation of lignocellulosic particles and the heat-curable binder composition
- adjusting the viscosity of the heat-curable binder
- forming a sheet from said mixture obtained in step (a-i), e.g. because less compacting pressure is required.

A person skilled in the art will understand that a binder system as used in a process of the present invention, i.e. a heat-curable binder comprising as main components for hardening carbohydrate compounds and amine co-reactants, requires a certain minimum temperature of at least 130 °C in order to facilitate a suitable reaction and/or rate of reaction of said main components for hardening the binder. In some cases it might not be possible to completely prevent that small amounts of said reactive components react with each other even at relatively low temperatures in a range of from 20 °C to 120 °C. However, hardening of the heat-curable binder composition so that the lignocellulosic composite results is only achieved in step b) of the process of the invention.

In a process of the present invention, in step a) and also in step b) before dielectrically heating the formed sheet the maximum temperature at the center of the formed sheet is below 70°C. The above considerations regarding the maximum temperature within the heat-curable binder composition also apply here, mutatis mutandis.

Preferred is a process of the present invention (preferably a process as defined herein above as being preferred), wherein step a) is conducted so that the formed sheet as resulting in step a) has, and wherein preferably also step b) is conducted so that the formed sheet before dielectrically heating has:
- an internal bond strength of < 0.05 N/mm², preferably < 0.04 N/mm², and more preferably < 0.03 N/mm², measured according to EN 319:1993
   and/or (preferably "and")
- a modulus of elasticity in bending of < 500 N/mm², preferably < 400 N/mm², and more preferably < 300 N/mm², measured according to EN 310:1993
   and/or (preferably "and")
- a bending strength of < 3 N/mm², preferably < 2 N/mm², and more preferably < 1 N/mm², measured according to EN 310:1993.

According to this preferred aspect of the present invention, step a) is conducted so that the formed sheet as resulting in step a) has certain mechanical properties, namely said above mentioned internal bond strength and/or modulus of elasticity in bending and/or bending strength, that from the perspective of the skilled person classify the formed sheet as an essentially "unhardened" ("uncured") intermediate material mixture, which is distinctly different from the resulting lignocellulosic composite obtained after step b). The mechanical properties of the formed sheet resulting after step a) of the preferred process, as defined above, are characteristic for an essentially unhardened intermediate material mixture. Correspondingly, the main components of the formed sheet, i.e. the lignocellulosic particles and the heat-curable binder composition are mixed with each other but are not (yet) finally bound.

Also preferred is a process of the present invention (preferably a process as defined herein above as being preferred), wherein step b) is conducted so that
- the internal bond strength of the resulting lignocellulosic composite is
   at least 0.2 N/mm², preferably at least 0.25 N/mm² and more preferably at least 0.3 N/mm², measured according to EN 319:1993
   and/or (preferably "and")
   at least 10 times as high as the internal bond strength of the formed sheet as resulting in step a)
   and/or (preferably "and")
- the modulus of elasticity in bending of the resulting lignocellulosic composite is
   at least 1200 N/mm², preferably at least 1500 N/mm² and more preferably at least 1800 N/mm², measured according to EN 310:1993
   and/or (preferably "and")
   at least 10 times as high as the modulus of elasticity in bending of the formed sheet as resulting in step a)
   and/or (preferably "and")
- the bending strength of the resulting lignocellulosic composite is
   at least 7 N/mm², preferably at least 10 N/mm² and more preferably at least 13 N/mm², measured according to EN 310:1993
   and/or (preferably "and")
   at least 10 times as high as the bending strength of the formed sheet as resulting in step a).

According to this preferred aspect of the present invention, step b) of at least temporarily simultaneously compacting and dielectrically heating the formed sheet as resulting in step a) in a dielectric heating and pressing unit so that the heat-curable binder composition hardens is conducted so that the resulting lignocellulosic composite has one or more of said mechanical properties as described above.

The inventors have found that surprisingly a single hardening step when properly conducted in a dielectric heating and pressing unit and comprising at least temporarily simultaneously compacting and dielectrically heating the formed sheet as resulting in step a) contrary to prevailing opinion results in the formation of a lignocellulosic composite with excellent mechanical properties as defined above.

Even more preferably step b) is conducted so that the resulting lignocellulosic composite has all of the above-mentioned material properties, i.e. an internal bond strength of at least 0.2 N/mm² and a modulus of elasticity in bending of at least 1200 N/mm² and a bending strength of at least 7 N/mm² (all measured according to EN 310:1993).

According to a related and likewise preferred aspect of the present invention, step b) is conducted so that the internal bond strength (measured according to EN 319:1993) and/or the modulus of elasticity in bending and/or the bending strength (both measured according to EN 310:1993) of the resulting lignocellulosic composite are at least 10 times as high as the respective properties of the formed sheet as resulting in step a).

In a non-limiting example of the above-mentioned preferred aspects of the present invention, the internal bond strength of the formed sheet as resulting in step a) is < 0.05 N/mm² and step b) is conducted (i.e., the process conditions in step b) are selected) so that the resulting lignocellulosic composite has an internal bond strength of at least 0.5 N/mm², i.e. a bond strength that is at least 10 times as high as the bond strength of the formed sheet present before said step b) (all internal bond strengths measured according to EN 319:1993).

Accordingly, dielectrically heating the formed (yet uncured) sheet in a dielectric heating and pressing unit allows for an efficient and continuous one step hardening protocol in contrast to expensive and elaborate non-continuous two-step hardening protocols utilized in the prior art (e.g. in EP 2 885 116 B1).

The inventors of the present invention have found that upon hardening (curing) of the binder caused by dielectric heating in step b) the mechanical properties are substantially improved in comparison with state of the art processes. Mechanical properties of sheets before and after dielectric heating in step b) of the process of the invention are summarized in the following table:

| mechanical property | (optionally pre-heated) uncured sheet before dielectric heating | cured sheet/lignocellulosic composite after dielectric heating | Absolute increase caused by dielectric heating |
|---|---|---|---|
| internal bond strength measured according to EN 319:1993 [N/mm²] | < 0.05 | ≥ 0.20, preferably ≥ 0.25, more preferably ≥ 0.30 | ≥ 0.15, preferably ≥ 0.20, more preferably ≥ 0.25 |
| modulus of elasticity in bending measured according to EN 310:1993 [N/mm²] | < 500 | ≥ 1200, preferably ≥ 1500, more preferably ≥ 1800 | ≥ 700, preferably ≥ 1000, more preferably ≥ 1300 |
| bending strength measured according to EN 310:1993 [N/mm²] | < 3 | ≥ 7, preferably ≥ 10, more preferably ≥ 13 | ≥ **4,** preferably ≥ 7, more preferably ≥ 10 |

Preferably, process conditions are set or adjusted in step b) so that the resulting lignocellulosic composite has one, two or all of said above-mentioned mechanical properties, wherein preferably the process conditions are selected from the group consisting of:
- the maximum temperature at the center of the formed sheet
- the duration of dielectrically heating the formed sheet
- the frequency of electromagnetic radiation used for dielectric heating
- the electrical power used to create the electromagnetic radiation for dielectric heating
- the compacting pressure applied for compacting the formed sheet.

Preferred is a process of the present invention (preferably a process as defined herein above as being preferred), wherein
- step a) is conducted so that the conversion of said
   (ii-a) one, two or more carbohydrate compounds
      and/or
   (ii-b) one or two compounds having two or more amino groups, preferably primary amino groups, comprising hexamethylenediamine and/or polylysine,
   after step a) is below 0.2, preferably below 0.1, more preferably below 0.05, based on the respective total amount of the compounds used for preparing the mixture in step (a-i)
   and/or (preferably "and")
- step b) before dielectrically heating is conducted so that the conversion of said
   (ii-a) one, two or more carbohydrate compounds
      and/or
   (ii-b) one or two compounds having two or more amino groups, preferably primary amino groups, comprising hexamethylenediamine and/or polylysine,
   before dielectrically heating is below 0.2, preferably below 0.1, more preferably below 0.05, based on the respective total amount of the compounds used for preparing the mixture in step (a-i)
   and/or (preferably "and")
- step b) is conducted so that the conversion of said
   (ii-a) one, two or more carbohydrate compounds
      and/or
   (ii-b) one or two compounds having two or more amino groups, preferably primary amino groups, comprising hexamethylenediamine and/or polylysine,
after step b) is above 0.5, preferably above 0.8, more preferable above 0.9, based on the respective total amount of the compounds used for preparing the mixture in step (a-i).

In more detail:

### (a) - conversion in step a):

Preferably, step a) is conducted so that the conversion of said (ii-a) one, two or more carbohydrate compounds after step a) is below 0.2, preferably below 0.1, more preferably below 0.05, based on the respective total amount of the carbohydrate compounds used for preparing the mixture in step (a-i).

And likewise preferably step a) is conducted so that the conversion of said (ii-b) one or two compounds having two or more (preferably primary) amino groups, comprising hexamethylenediamine and/or polylysine, after step a) is below 0.2, preferably below 0.1, more preferably below 0.05, based on the respective total amount of the amine co-reactant compounds used for preparing the mixture in step (a-i).

More preferably, both requirements (relating to the conversion of components (ii-a) and (ii-b) apply in combination.

### (b) - conversion in step b) before dielectrically heating is conducted:

Preferably step b) before dielectrically heating is conducted so that the conversion of said (ii-a) one, two or more carbohydrate compounds before dielectrically heating is below 0.2, preferably below 0.1, more preferably below 0.05, based on the respective total amount of the carbohydrate compounds used for preparing the mixture in step (a-i).

And likewise preferably step b) before dielectrically heating is conducted so that the conversion of said (ii-b) one or two compounds having two or more (preferably primary) amino groups, comprising hexamethylenediamine and/or polylysine, before dielectrically heating is below 0.2, preferably below 0.1, more preferably below 0.05, based on the respective total amount of the amine co-reactant compounds used for preparing the mixture in step (a-i).

More preferably, both requirements (relating to the conversion of components (ii-a) and (ii-b) apply in combination.

### (c) - conversion in step b):

Preferably step b) is conducted so that the conversion of said (ii-a) one, two or more carbohydrate compounds after step b) is above 0.5, preferably above 0.8, more preferable above 0.9, based on the respective total amount of the carbohydrate compounds used for preparing the mixture in step (a-i).

And likewise preferably step b) is conducted so that the conversion of said (ii-b) one or two compounds having two or more (preferably primary) amino groups, comprising hexamethylenediamine and/or polylysine, after step b) is above 0.5, preferably above 0.8, more preferable above 0.9, based on the respective total amount of the amine co-reactant compounds used for preparing the mixture in step (a-i).

More preferably, both requirements (relating to the conversion of components (ii-a) and (ii-b) apply in combination.

Preferably, the requirements and provisos according to (a), (b), and (c) (in each case relating to the conversion of components (ii-a) and (ii-b)) apply in combination.

According to this preferred aspect of the present invention, step a) and/or step b) are conducted so that said (ii-a) one, two or more carbohydrate compounds and/or said (ii-b) one or two compounds having two or more (preferably primary) amino groups, comprising hexamethylenediamine and/or polylysine, are only to a limited extent converted in step a) and/or are mainly converted during said hardening step b). I.e., step a) of making a formed sheet is preferably conducted so that said components (ii-a) and/or (ii-b) for hardening the binder via reaction with each other, do not react to a high extent. Vice versa, step b) is preferably conducted so that said components (ii-a) and/or (ii-b) for hardening the binder via reaction with each other, do react to a very considerable extent, and preferably even react quantitatively.

Accordingly, the conversion of said compounds (ii-a) and/or (ii-b) after step a) is preferably below 0.2, more preferably below 0.1, even more preferably below 0.05, based on the respective total amount of the compounds, i.e. compounds (ii-a) and/or compounds (ii-b) respectively, used for preparing the mixture in step (a-i). I.e., in step a) only a small amount of said compounds (ii-a) and/or (ii-b) react.

Correspondingly, the conversion of said compounds (ii-a) and/or (ii-b) after step b) is preferably above 0.5, more preferably above 0.8, even more preferable above 0.9, based on the respective total amount of the compounds, i.e. compounds (ii-a) and/or compounds (ii-b) respectively, used for preparing the mixture in step (a-i). I.e., a large amount of said compounds (ii-a) and/or (ii-b) react, and preferably almost the total quantity of component(s) (ii-a) and/or (ii-b) for hardening the binder react(s) (with each other).

Herein and throughout the whole text the term "conversion" designates the ratio of how much of a certain component (reactant) has reacted after a specific step or after a set time. E.g., a conversion of 0.1 of said (ii-a) one, two or more carbohydrate compounds after step a) means that 10% of said (ii-a) one, two or more carbohydrate compounds that had been used for preparing the mixture in step (a-i) have reacted at the end of step a).

Herein and throughout the whole text the term "react" or "reacted" or "reaction" means that the molecular structure of a compound has or is changed by conversion of a functional group or by creating a new chemical bond with another molecule.

Preferred is a process of the present invention (preferably a process as defined herein above as being preferred), wherein in step b) the formed sheet is dielectrically heated by applying a high frequency electrical field.

EP 3230028 B1 and WO 2016/091918 A1 (BASF SE) disclose a method for producing lignocellulosic materials by hardening in a high frequency electric field. However, the disclosed method has not been applied to a carbohydrate-based binder according to the present invention. The binders in EP 3230028 B1 for example were selected from the group consisting of aminoplastic resin and organic isocyanate having at least two isocyanate groups.

The inventors of the present invention have found out that surprisingly hardening of a mixture comprising (i) lignocellulosic particles and (ii) a heat-curable binder composition comprising as components for hardening the binder via reaction with each other at least (ii-a) one, two or more carbohydrate compounds and (ii-b) one or two compounds having two or more amino groups, preferably primary amino groups, comprising hexamethylenediamine and/or polylysine, wherein said mixture has been formed into a formed sheet can be efficiently carried out in a single step by applying a high frequency electric field.

The term "high-frequency electrical field" used herein designates and includes any kind of high-frequency electrical or electromagnetic field such as microwave irradiation or a high-frequency electrical field, which results after applying a high-frequency alternating voltage at a plate capacitor between two capacitor plates. Preferred frequencies for the high-frequency electrical field are in the range of from 100 kHz to 30 GHz, preferably 6 MHz to 3 GHz, more preferably 13 MHz to 41 MHz. Especially suitable and preferred are the respective nationally and internationally approved frequencies such as 13,56 MHz, 27,12 MHz, 40,68 MHz, 2,45 GHz, 5,80 GHz, 24,12 GHz, more preferably 13,56 und 27,12 MHz. The electrical power used to create such a high-frequency electrical field in the processes of the present invention preferably is in the range of from 10 to 10.000 kWh, more preferably of from 100 to 5.000 kWh, most preferably of from 500 to 2.000 kWh.

Preferred is a process of the present invention (preferably a process as defined herein above as being preferred), wherein in step b) the formed sheet is dielectrically heated to a maximum temperature at the center of the formed sheet of at least 130 °C, preferably of at least 140 °C, more preferably of at least 150 °C.

The term "center of the formed sheet" as used in this text designates the location which is approximately in the middle between the surfaces of the three-dimensional object defined by the form of said formed sheet resulting after step a).

Preferably, in a preferred process of the present invention the temperature at the center of the formed sheet is monitored and/or controlled, preferably controlled. It is particularly preferred to control the temperature at the center of the formed sheet, so that the binder hardens via reaction of the (ii-a) one, two or more carbohydrate compounds and the (ii-b) one or two compounds having two or more amino groups, comprising hexamethylenediamine and/or polylysine (amine co-reactants) and binds the lignocellulosic particles in a controlled manner, preferably so that specific mechanical properties (as defined above) result.

It has been found out that a certain temperature is required to sufficiently promote or support the reaction of said carbohydrate compounds and amine co-reactants. The preferred process of the present invention furthermore takes into account that said required temperature has to be reached in the center of the formed sheet in order to facilitate hardening of the binder not only in the surface areas but throughout all regions of the material.

Preferred is a process of the present invention (preferably a process as defined herein above as being preferred), wherein the formed sheet is compacted in step b) with press plates having a maximum temperature of below 125 °C, preferably below 110 °C, at the beginning of the compacting.

According to the present invention step b) is carried out in a dielectric heating and pressing unit comprising dielectric heating means and pressing means, preferably press plates. In this preferred embodiment of the present invention said press plates have a maximum temperature of below 125 °C, preferably below 110 °C, at the beginning of the compacting. While an increased temperature of the press plates might help to prevent condensation of water and/or electrical discharges on the press plates, the maximum temperature is chosen so that premature hardening is avoided.

Thus, although the press plates might be heated to a maximum temperature of below 125 °C, preferably below 110 °C, at the beginning of the compacting, this does at least not mean that the heated press plates cause the hardening of the binder in the center of the formed sheet. Rather, said hardening process is primarily initiated and supported by dielectrically heating of the formed sheet, preferably by applying a high frequency electrical field. As stated, this is particularly true for the center of the formed sheet.

Preferred is a process of the present invention (preferably a process as defined herein above as being preferred), wherein in step b) of at least temporarily simultaneously compacting and dielectrically heating the formed sheet the maximum temperature at the center of the formed sheet is at least 5° C higher, preferably at least 10 °C higher, more preferably at least 20 °C higher, than the maximum temperature of the press plates at the beginning of the compacting.

In contrast to processes not according to the present invention comprising multi-step hardening protocols for binder systems based on carbohydrate compounds, which rely on conductional heating with press plates at very high temperatures and heat transfer from the surface to the center of the (formed) sheet, the preferred process according to the present invention relies on a uniform dielectric heating of all areas (volume regions) within the (formed) sheet. It is thus preferred that the maximum temperature at the center of the (formed) sheet is i) sufficiently high to promote reaction of the reactive binder components (hardening) and ii) higher than the maximum temperature of the press plates at the beginning of the compacting. It goes without saying that the surface area of the (formed) sheet is dielectrically heated to a temperature similar to the temperature reached at the center of the (formed) sheet.

In a non-limiting example of a preferred process according to the present invention, the maximum temperature at the center of the sheet reached in step b) may thus be 150 °C, while the press plates have a maximum temperature of only 100 °C at the beginning of the compacting. According to this non-limiting example, the maximum temperature at the center of the formed sheet is 50° C higher than the maximum temperature of the press plates at the beginning of the compacting.

Preferred is a process of the present invention (preferably a process as defined herein above as being preferred), wherein step a) of making a formed sheet
- is conducted in a forming unit, wherein the forming unit is a scattering unit not comprising any means for heating and/or pressing the sheet
   and/or (preferably "and")
- comprises a step of scattering said lignocellulosic particles and of mixing said particles with said heat-curable binder composition.

Thus, in a preferred process of the present invention step a) of making a formed sheet is conducted in a forming unit not comprising any means for heating the sheet. Correspondingly, preferably the hardening of the heat-curable binder composition exclusively takes place in the dielectric heating and pressing unit of step b).

In another preferred process of the present invention, the formed sheet in step a) is obtained by scattering lignocellulosic particles and mixing said particles with a heat-curable binder composition according to the invention.

More preferably step (a-i) of preparing a mixture comprising (i) lignocellulosic particles and (ii) a heat-curable binder composition comprises one or more of the following steps:
- blending said lignocellulosic particles with one or more or all ingredients of the heat-curable binder composition or spraying one or more or all ingredients of the heat-curable binder composition onto said lignocellulosic particles, wherein before blending or spraying said ingredients of the binder are pre-mixed or not pre-mixed,
- scattering one, two or more layers of a mixture comprising said lignocellulosic particles together with one or more or all ingredients of the heat-curable binder composition,
- for preparing a multilayer lignocellulosic composite providing or preparing at least a first and a second individual mixture, and using said first and second individual mixtures for making a first and a second layer of the multilayer lignocellulosic composite, wherein the first and the second layer preferably are in contact with each other, and/or wherein the first and the second individual mixture have the same or a different composition,
- for preparing a multilayer lignocellulosic composite preparing two or more layers, preferably preparing two or more layers by scattering individual layers on top of each other, each layer comprising lignocellulosic particles and a binder, wherein in the two or more layers the lignocellulosic particles and/or the binders are the same or different.

Preferred is a process of the present invention (preferably a process as defined herein above as being preferred), wherein step a) of making a formed sheet does not comprise any active heating of the sheet (e.g., by using any heating device) and/or does not comprise any pressing of the sheet (specifically it does not comprise the use of a hot press).

According to this preferred aspect of the present invention, step a) of making a formed sheet leads to a non-hardened and pre-formed intermediate mixture (formed sheet), which has not been actively heated and/or pressed. Correspondingly, a process of the invention is therefore preferred wherein the hardening process is only conducted in the dielectric heating and pressing unit of step b).

In some cases preferred is a process of the present invention (preferably a process as defined herein above as being preferred), wherein in step b) the formed sheet as resulting in step a) is pre-heated (as defined below) and/or pre-compacted before it is at least temporarily simultaneously compacted and dielectrically heated. According to this preferred aspect of the present invention, it is beneficial to pre-heat and/or pre-compact the formed sheet as resulting in step a) in the dielectric heating and pressing unit of step b). Such a pre-heating and/or pre-pressing step facilitates the hardening process of the mixture comprising (i) lignocellulosic particles and (ii) a heat-curable binder composition as it leads to a denser and more homogenised intermediate mixture.

Pre-heating the formed sheet as resulting in step a) in step b) may preferably be carried out for a period of time in the range of from 10 s to 120 s and/or may preferably lead to a maximum temperature at the center of the formed sheet in the range of from 25 °C to 120 °C, preferably 25 °C to 100 °C, more preferably 25 °C to 80 °C, most preferably 25 to 60 °C.

Preferably, the formed sheet is pre-heated using dielectric heating means, more preferably the formed sheet is dielectrically pre-heated by applying a high frequency electrical field. "Pre-heating" as conducted in step b), i.e. in the dielectric heating and pressing unit, designates a heating process wherein the formed sheet is heated to a maximum temperature below the temperature required for starting the hardening reaction of the heat-curable binder composition. I.e., preferably the maximum temperature reached by pre-heating in step b) at the center of the sheet is below 120 °C.

Preferred is a process of the present invention (preferably a process as defined herein above as being preferred), additionally comprising at least:
post-processing the lignocellulosic composite resulting in step b) so that a product of the lignocellulosic composite results,
wherein preferably the post-processing comprises one or more of the following steps:
   - cooling
   - stacking
   - coating
   - grinding and/or sanding
   - packing and/or wrapping
   - cutting and/or sawing.

According to this preferred aspect of the present invention the lignocellulosic composite resulting in step b) is further processed to result in a product of the lignocellulosic composite. Non-limiting examples of such products are a painted board, a packed board, a stack of grinded and wrapped boards, etc. It is essential to note that none of the above listed post-processing steps includes any kind of post-curing or post-hardening as the process according to the present invention only requires one hardening step, namely said step b) of at least temporarily simultaneously compacting and dielectrically heating in a dielectric heating and pressing unit the formed sheet as resulting in step a).

Preferred is a process of the present invention (preferably a process as defined herein above as being preferred), comprising the additional step of:
pre-b) before step b), preferably before step a), determining one, two or more parameters of the lignocellulosic composite to be produced,
wherein the process conditions for step b) are selected so that said one, two or more parameters are present in the lignocellulosic composite resulting in step b),
wherein the one parameter is or two or more of said parameters are selected from the group consisting of:
   - an internal bond strength, determined according to EN 319:1993 of at least 0.20 N/mm², preferably at least 0.25 N/mm², more preferably at least 0.30 N/mm², and most preferably at least 0.35 N/mm²
   - a thickness swelling after 24 hours in water at 20 °C, determined according to DIN EN 317:1993-08, of less than 70 %, preferably less than 60 %, more preferably less than 50 %, and most preferably less than 40 %
   - a maximum density deviation within the lignocellulosic composite, wherein in a cross section oriented perpendicularly to the plane of the lignocellulosic composite the difference between the density maximum of the lignocellulosic composite and the density minimum in the core of the lignocellulosic composite is at most 100 kg/m³.

Industry in general and especially the furniture industry requires specific material properties of lignocellulosic composites (e.g. boards in shelves). It is important that a process of producing a lignocellulosic composite results in high quality products with excellent properties, e.g. results in a lignocellulosic composite that features one, two or all of the parameters listed above.

Accordingly, in a preferred aspect of the present invention, one, two or more parameters (such as internal bond strength, thickness swelling and the like) of the lignocellulosic composite to be produced are determined before step b), preferably before step a). Then, the process conditions for step b) are selected so that said one, two or more parameters are present in the lignocellulosic composite resulting. These process conditions are preferably selected from the group consisting of:
- maximum temperature at the center of the formed sheet
- duration of dielectrically heating the formed sheet
- frequency of electromagnetic radiation used for dielectric heating
- electrical power used to create the electromagnetic radiation for dielectric heating
- compacting pressure applied to compact the formed sheet.

Preferred is a process of the present invention (preferably a process as defined herein above as being preferred), wherein the process conditions in step b) are selected so that
- the maximum temperature at the center of the formed sheet is reached in less than 200 s, preferably in less than 180 s, more preferably in less than 160 s, after the start of dielectrically heating the formed sheet,
   and/or (preferably "and")
- the maximum temperature at the center of the formed sheet is reached in less than 40 s·(d/mm), preferably in less than 30 s·(d/mm), more preferably in less than 20 s·(d/mm) after the start of dielectrically heating the formed sheet, where d is the thickness of the lignocellulosic composite in mm at the end of step b),
   and/or (preferably "and")
- more than 95%, preferably more than 97%, more preferably more than 99%, per mole of the total amount of carbohydrate compounds as present in component (ii-a) react and/or more than 95%, preferably more than 97%, more preferably more than 99%, per mole of the total amount of compounds having two or more amino groups as present in component (ii-b) react.

According to these preferred aspects of the present invention, the process conditions in step b) are selected to guarantee an effective (one-step) hardening of the heat-curable binder, resulting in a high quality lignocellulosic composite. For preferably selected process conditions see above.

Preferably, the maximum temperature at the center of the formed sheet is reached in a short period of time of less than 200 s, preferably in less than 180 s, more preferably in less than 160 s, after the start of dielectrically heating the formed sheet in step b). Herein, preferably the maximum temperature to be reached at the center of the formed sheet is at least 130 °C, more preferably at least 140 °C, even more preferably at least 150 °C. The short time period needed to reach said maximum temperature once more highlights the effectiveness of dielectric heating. The person skilled in the art is aware that the specific period of time required to reach the maximum temperature at the center of the formed sheet individually depends on several factors such as the kind of lignocellulosic particles and/or heat-curable binder composition used, the thickness of the formed sheet, the water content of the mixture and the power and/or frequency of the electromagnetic radiation applied for dielectric heating.

Preferably, the maximum temperature at the center of the formed sheet is reached in less than 40 s·(d/mm), preferably in less than 30 s·(d/mm), more preferably in less than 20 s·(d/mm) after the start of dielectrically heating the formed sheet, where d is the thickness of the lignocellulosic composite in mm at the end of step b). Preferably the maximum temperature to be reached at the center of the formed sheet is at least 130 °C, more preferably at least 140 °C, even more preferably at least 150 °C. E.g., if the thickness d of the formed sheet is 10 mm, said maximum temperature is preferably reached in less than 400 s, more preferably in less than 300 s, even more preferably in less than 200 s, after the start of dielectrically heating the formed sheet.

The above described preferred processes of the present invention allow for a fast and effective production of a lignocellulosic composite.

It is furthermore preferred that the process conditions in step b) are selected so that more than 95%, preferably more than 97%, more preferably more than 99%, per mole of the total amount of carbohydrate compounds as present in component (ii-a) react and/or more than 95%, preferably more than 97%, more preferably more than 99%, per mole of the total amount of compounds having two or more amino groups as present in component (ii-b) react. This preferred process takes into account that an effective (one-step) hardening of the heat-curable binder requires a quantitative reaction of the major components of the binder in order to guarantee beneficial material properties of the resulting lignocellulosic composite and optimum use of the binder components employed (for the sake of sustainability an inefficient use of binder components should be avoided).

Preferred is a process of the present invention (preferably a process as defined herein above as being preferred), wherein the formed sheet resulting after step a) is a
- single-layer sheet, comprising one layer of a mixture at least comprising (i) lignocellulosic particles and (ii) a heat-curable binder composition comprising as components for hardening the binder via reaction with each other at least (ii-a) one, two or more carbohydrate compounds and (ii-b) one or two compounds having two or more amino groups, comprising hexamethylenediamine and/or polylysine,
   or
- multilayer sheet, comprising two or more layers, each layer comprising a mixture at least comprising (i) lignocellulosic particles and (ii) a heat-curable binder composition comprising as components for hardening the binder via reaction with each other at least (ii-a) one, two or more carbohydrate compounds and (ii-b) one or two compounds having two or more amino groups, comprising hexamethylenediamine and/or polylysine.

Preferred is a process of the present invention (preferably a process as defined herein above as being preferred), wherein the heat-curable binder composition comprises as components for hardening the binder via reaction with each other at least
A) (ii-a) one, two or more, preferably bio based, carbohydrate compounds
   and
   (ii-b) hexamethylenediamine, but preferably no polylysine and more preferably no polylysine and no other compound having two or more amino groups,
   or
B) (ii-a) one, two or more, preferably bio based, carbohydrate compounds
   and
   (ii-b) polylysine, but preferably no hexamethylenediamine and more preferably no hexamethylenediamine and no other compound having two or more amino groups, or
C) (ii-a) one, two or more, preferably bio based, carbohydrate compounds
   and
   (ii-b) hexamethylenediamine and polylysine (i.e., both compounds), but preferably no other compound having two or more amino groups
   or
D) (ii-a) one, two or more, preferably bio based, carbohydrate compounds
   and
   (ii-b) two, preferably bio based, compounds having two or more amino groups, preferably primary amino groups, comprising only one compound of hexamethylenediamine and polylysine.

In some cases the heat-curable binder composition in addition to hexamethylenediamine and/or polylysine additionally comprises one or more other compounds having two or more amino groups selected from the group consisting of
- diamines, triamines, tetraamines, oligoamines and polyamines,
preferably aliphatic diamines and polyamines.

According to this preferred aspect of the present invention, the one or two, preferably bio based, compounds having two or more amino groups, are selected from the group consisting of the amine co-reactants listed above.

Herein and throughout the present text, the term "amine co-reactant" relates to any organic compound having two or more (primary or secondary, preferably primary) amino groups, which may independently be substituted or unsubstituted. Diamines have two amino groups, triamines have three amino groups, tetraamines have four amino groups, oligoamines have 5 to 10 amino groups, and polyamines have more than 10 amino groups. The respective amino groups of the amine co-reactants are preferably part of an alkyl, cycloalkyl, heteroalkyl, or cycloheteroalkyl compound, each of which may be optionally substituted. Herein, the term "optionally substituted" includes the replacement of hydrogen atoms with other functional groups. Such other functional groups include, but are not limited to hydroxy, halo, thiol, alkyl, haloalkyl, heteroalkyl, aryl, arylalkyl, arylheteroalkyl, nitro, sulfonic acids and derivatives thereof, carboxylic acids, and the like. Moreover, according to the present invention, any of, hydroxy, thiol, alkyl, haloalkyl, heteroalkyl, aryl, arylalkyl, arylheteroalkyl, and/or sulfonic acid group may optionally be further substituted.

A non-limiting example of a preferred amine co-reactant according to the present invention is a diamine, preferably said diamine is a molecule having the formula H₂N-R-NH₂, wherein R is an alkyl, cycloalkyl, heteroalkyl, or cycloheteroalkyl, preferably an alkyl, each of which may be optionally substituted. More preferably the diamine is an aliphatic diamine having the formula H₂N-R-NH₂, wherein R is preferably an alkyl group selected from C₂-C₂₄, more preferably from C₃-C₁₆, even more preferably from C₄-C₁₀. As used herein, the term "alkyl" includes a chain of carbon atoms, which may optionally be branched and/or unsaturated. It is to be further understood that the alkyl group is preferably of limited length. In particular, shorter alkyl groups may add less lipophilicity to the compound and accordingly will have different reactivity towards the carbohydrate component and solubility in a binder solution.

Preferably the diamine is selected from the group consisting of 1,2-diaminoethane, 1,4-diaminobutane, 1,5-diaminopentane, 1,6-diaminohexane (hexamethylenediamine, HMDA), 1,12-diaminododecane, 1,4-diaminocyclohexane, 1,4-diaminobenzene, 2-methyl-pentamethylenediamine, 1,3-pentanediamine, and 1,8-diaminooctane, 1,6-diaminohexane and lysine. More preferably the diamine is 1,6-diaminohexane (hexamethylenediamine, HMDA).

According to another preferred aspect, the amine co-reactant is a triamine, preferably selected from the group consisting of diethylenetriamine, 1-piperazineethaneamine, or bis(hexamethylene)triamine. In yet another preferred aspect, the amine co-reactant is a tetraamine, for example triethylenetetramine or an oligoamine, for example tetraethylenepentamine.

In another preferred aspect, the amine co-reactant is a polyether-polyamine. For example, said polyetherpolyamine is a diamine or a triamine. More preferably the polyether-polyamine is a trifunctional primary amine having an average molecular weight of around 400-500, e.g. Jeffamine T-403 Polyetheramine (e.g. Huntsman Corporation).

In a further preferred aspect, the amine co-reactant is a polyamine. Said polyamine is preferably selected from the group consisting of chitosan, polylysine, polyethylene imine, poly(N-vinyl-N-methyl amine), polyaminostyrene and polyvinylamines. In a specific example, the amine co-reactant component comprises a polyvinyl amine. As used herein, the polyvinyl amine can be a homopolymer or a copolymer. The most preferably used polyamine is polylysine.

Polylysine is a polymerization product of the monomer lysine, preferably L-lysine, and optionally further monomers selected from the group consisting of
a) amino acids,
b) amines comprising at least two amino groups, wherein the amines are no amino acids, and
c) dicarboxylic and/or tricarboxylic acids, which are no amino acids,
wherein at least 70 wt.-%, preferably at least 75 wt.-%, preferably at least 80 wt.-%, preferably at least 85 wt.-%, preferably at least 90 wt.-%, preferably at least 95 wt.-%, preferably at least 97.5 wt.-%, preferably at least 99 wt.-%, preferably 100 wt.-% lysine, is used as the monomer for the polymerization reaction based on the total amount of monomers.

Preferred are homopolymers of lysine, preferably homopolymers of L-lysine.

Polylysine comprises or consists of dimers (n=2), trimers (n=3), oligomers (n = 4-10) and macromolecules (n > 10), wherein n is the number of lysine monomers which have been reacted to form the dimers, trimers, oligomers and macromolecules. Additionally, monomers can be present in a limited amount in a mixture with the polylysine due to incomplete conversion of the monomers during the polymerization reaction.

Preferably, the polylysine has a total weight-average molecular weight M_{w,total} in the range of from 800 g/mol to 10,000 g/mol, preferably 1,000 g/mol to 7,500 g/mol, preferably 1,150 g/mol to 5,000 g/mol, more preferably 1,300 g/mol to 5,000 g/mol, more preferably 2,400 to 5,000 g/mol, most preferably 3,000 to 5,000 g/mol.

In the present text, the term polylysine also includes polylysine derivatives, which are prepared by or can be prepared by a modifying reaction of (i) the amino groups present in the polylysine obtained by polymer synthesis with (ii) electrophiles like carboxylic acid, epoxides, and lactones, wherein the total amount of amino groups reacted in the modifying reaction is 20 % or lower, preferably 10 % or lower, based on the total amount of amino groups in the polylysine obtained in the polymer synthesis (i.e., before modification).

Preferred is a process of the present invention (preferably a process as defined herein above as being preferred), wherein the heat-curable binder composition comprises as components for hardening the binder via reaction with each other at least
(ii-a) one, two or more, preferably bio based, carbohydrate compounds selected from the group consisting of
   - monosaccharides, disaccharides, oligosaccharides, polysaccharides and starch,
      preferably monosaccharides selected from the group consisting of pentoses and hexoses
      even more preferably the one, two or more, preferably bio based, carbohydrate compounds are glucose and/or fructose,
   and
(ii-b) one or two, preferably bio based, compounds having two or more amino groups, comprising hexamethylenediamine and/or polylysine.

According to this preferred aspect of the present invention, the one, two or more, preferably bio based, carbohydrate compounds are selected from the group of compounds listed above.

Preferably, the carbohydrate compound is a monosaccharide in its aldose or ketose form, including a triose, a tetrose, a pentose, a hexose, or a heptose; or a polysaccharide; or combinations thereof.

For example, when a triose serves as the carbohydrate compound, or is used in combination with other reducing sugars and/or a polysaccharide, an aldotriose sugar or a ketotriose sugar may be utilized (including glyceraldehyde and dihydroxyacetone, respectively). When a tetrose serves as the carbohydrate compound, or is used in combination with other reducing sugars and/or a polysaccharide, aldotetrose sugars (including erythrose and thre-ose) and keto-tetrose sugars (including erythrulose), may be utilized. Moreover, when a pentose serves as the carbohydrate compound, or is used in combination with other reducing sugars and/or a polysaccharide, aldopentose sugars (including ribose, arabinose, xylose, and lyxose) and ketopentose sugars (including ribulose, arabulose, xylulose, and lyx-ulose), may be utilized. When a hexose serves as the carbohydrate compound, or is used in combination with other reducing sugars and/or a polysaccharide, aldohexose sugars (including glucose (i.e. dextrose), mannose, galactose, allose, altrose, talose, gulose, and idose) and ketohexose sugars (including fructose, psicose, sorbose and tagatose), may be utilized. When a heptose serves as the carbohydrate compound, or is used in combination with other reducing sugars and/or a polysaccharide, a ketoheptose sugar (including sedoheptulose) may be utilized. Other stereoisomers of such carbohydrate compounds not known to occur naturally are also contemplated to be useful in the binder compositions as described herein.

Specifically preferred are glucose (i.e. dextrose), fructose and mixtures of carbohydrates comprising or consisting of glucose and fructose, preferably in a weight ratio of glucose to fructose of 60 : 40 to 40 : 60.

In another preferred aspect, the carbohydrate component is invert sugar syrup or high fructose corn syrup (HFCS).

As mentioned above, the carbohydrate compound may be a polysaccharide. For example, a polysaccharide with a low degree of polymerization, preferably selected from the group consisting of molasses, starch, cellulose hydrolysates, or mixtures thereof.

According to another preferred aspect, the carbohydrate compound is a starch hydrolysate, a maltodextrin, or a mixture thereof. While carbohydrates of higher degrees of polymerization may not be preferable, they may none the less be useful within the scope of the present invention particularly by in situ depolymerization.

In a particularly preferred aspect of the present invention, at least one of the one, two or more, preferably bio based, carbohydrate compounds, is selected from the group consisting of: ribose, arabinose, xylose, lyxose, glucose (dextrose), mannose, galactose, allose, altrose, talose, gulose, idose, fructose, psicose, sorbose, dihydroxyacetone, sucrose, maltodextrin and tagatose, as well as mixtures thereof,
and
at least one of the one, two or more, preferably bio based, compounds having two or more amino groups is selected from the group consisting of: 1,2-diaminoethane, 1,4-diaminobutane, 1,5-diaminopentane, 1,6-diaminohexane, 1,12-diaminododecane, 1,4-diaminocyclohexane, 1,4-diaminoben-zene, diethylenetriamine, triethylenetetramine, tetraethylenepentamine, 1-piperazine-ethaneamine, 2-methyl-pentamethylenediamine, 1,3-pentanediamine, and bis(hexamethylene)-triamine, 1,8-diaminooctane, lysine and polylysine as well as mixtures thereof.

Preferred is a process of the present invention (preferably a process as defined herein above as being preferred), wherein
- the mixture of step a) comprises (i) lignocellulosic particles and (ii) a heat-curable binder composition, wherein the mass ratio of the weight of the solid content of the heat-curable binder composition to the weight of the lignocellulosic particles in an oven-dry state is less than 0.18, preferably less than 0.16, more preferably less than 0.15
   and/or (preferably "and")
- the heat-curable binder composition of step a) comprises as components for hardening the binder via reaction with each other at least (ii-a) one, two or more, preferably bio based, carbohydrate compounds and (ii-b) one or two, preferably bio based, compounds having two or more amino groups, comprising hexamethylenediamine and/or polylysine, wherein the ratio of the mass of all compounds present in said component (ii-a) to the mass of all compounds present in said component (ii-b) is in the range of from 95:5 to 50:50, preferably in a range of from 90:10 to 60:40, more preferably in a range of from 85:15 to 70:30.

According to this preferred aspect of the present invention, the at least one mixture of step a) comprises a relatively low amount of the heat-curable binder composition in relation to the amount of the lignocellulosic particles. More particularly, the mass ratio of the weight of the solid content of the heat-curable binder composition to the weight of the lignocellulosic particles in an oven-dry state is less than 0.18, preferably less than 0.16, more preferably less than 0.15. The relatively low preferred amounts of the solid content of the heat-curable binder composition is advantageous as it leads to sustainable processes and/or sustainable products, i.e. lignocellulosic composites mainly consisting of bio based materials.

Surprisingly, in the process of the present invention a relatively low amount of binder suffices to bind a large amount of lignocellulosic particles, as the dielectric heating, preferably by applying a high frequency electrical field, of the formed sheet in step b) of the process allows for a perfect hardening of the heat-curable binder also in the center of the formed sheet, in contrast to other hardening treatments (e.g. the use of a hot press). In other words, the binder is used more efficiently in the process of the present invention.

According to another preferred aspect of the present invention, the heat-curable binder composition of step a) comprises as components for hardening the binder via reaction with each other at least (ii-a) one, two or more, preferably bio based, carbohydrate compounds and (ii-b) one or two, preferably bio based, compounds having two or more amino groups, comprising hexamethylenediamine and/or polylysine, wherein none of the compounds having two or more amino groups is polylysine, wherein the ratio of the mass of all compounds present in said component (ii-a) to the mass of all compounds present in said component (ii-b) is in the range of from 90:10 to 50:50, preferably in a range of from 85:15 to 60:40, more preferably in a range of from 82:18 to 70:30. Preferably, the compounds having two or more amino groups are selected from the preferred diamines, triamines or polyetherpolyamines stated above.

This means, that in cases wherein the binder does not comprise polylysine, binder compositions with an excess of the one, two or more, preferably bio based, carbohydrate compounds of component (ii-a) are particularly preferred, because they allow for an efficient hardening process and also for a high content of bio based raw materials within the lignocellulosic composite.

According to another preferred aspect of the present invention, the heat-curable binder composition of step a) comprises as components for hardening the binder via reaction with each other at least (ii-a) one, two or more, preferably bio based, carbohydrate compounds and (ii-b) one or two, preferably bio based, compounds having two or more amino groups, comprising hexamethylenediamine and/or polylysine, wherein the one or one of the two compounds having two or more amino groups is polylysine, wherein the ratio of the mass of all compounds present in said component (ii-a) to the mass of all compounds present in said component (ii-b) is in the range of from 10:90 to 90:10, preferably in the range of from 20:80 to 80:20.

This means, that in cases wherein the heat-curable binder composition comprises polylysine:
- heat-curable binder compositions with an excess of polylysine, or
- heat-curable binder compositions with an excess of the one, two or more, preferably bio based, carbohydrate compounds of component (ii-a), or
- heat-curable binder compositions comprising polylysine and carbohydrate compounds in a mass ratio of 1:1
are all suitable as they all allow for an efficient hardening process.

It is particularly preferred that the one or one of the two, preferably bio based, compounds having two or more amino groups is polylysine.

Preferred is a process of the present invention (preferably a process as defined herein above as being preferred), wherein the (i) lignocellulosic particles are obtained from European tree species,
preferably the (i) lignocellulosic particles are obtained from one or more European tree species selected from the group consisting of Silver fir, Circum-Mediterranean firs, Field maple, Norway maple, Sycamore maple, European horse-chestnut, Tree of heaven, Italian alder, Common alder, Grey alder, Green alder, Birches, Common hornbeam, Oriental hornbeam, Sweet chestnut, Nettle tree, Lawson cypress, Cornelian cherry, Common dogwood, Common hazel, Mediterranean cypress, Tasmanian blue gum, Spindle tree, European beech, Alder buckthorn, Narrow-leaved ash, Common ash, Manna ash, European holly, Common walnut, Common juniper, Prickly juniper, Phoenician juniper, Spanish juniper, European larch, Olive, European hop-hornbeam, Norway spruce, Serbian spruce, Sitka Spruce, Arolla pine, Aleppo and Turkish pine, Dwarf mountain pine, Black pine, Maritime pine, Stone pine, Scots pine, White poplar, Black poplar, Eurasian aspen, Wild cherry, Cherry plum, Mahaleb cherry, Bird cherry, Blackthorn, Douglas fir, Turkey oak, Hungarian oak, Holm oak, Pin oak, Downy oak, Pyrenean oak, Pedunculate and sessile oak, Cork oak, Black locust, White willow, Goat willow, Black elderberry, Common white-beam, Rowan, Service tree, Wild service tree, Tamarisks, European yew, Limes, and Elms.

This preferred aspect of the present invention takes into account that it is desirable to utilize lignocellulosic particles, which have been obtained from regionally available, sustainable sources, i.e. from European tree species instead of rainforest wood from South America, Africa and Asia.

Preferred is a process of the present invention (preferably a process as defined herein above as being preferred), wherein the heat-curable binder composition additionally comprises one, two or more compounds independently selected from the group consisting of:
- alkali salts and alkaline earth salts, preferably sodium nitrate
- hydrophobing agents, preferably paraffin and mixtures comprising paraffin, more preferably paraffin emulsions
- dyes, pigments
- antifungal agents and antibacterial agents
- rheology modifiers, fillers
- release agents
- surfactants, tensides.

These additional binder compounds are not components employed for hardening the binder via reaction with each other.

Advantageously, in a process of the present invention (preferably a process as defined herein above as being preferred) the addition of alkali salts and alkaline earth salts, preferably sodium nitrate, to the binder leads to improved properties of the resulting lignocellulosic composite. In particular, the addition of alkali salts and alkaline earth salts, preferably sodium nitrate, to the binder improves the internal bond strength and/or the thickness swelling after 24 hours in water at 20 °C of a resulting lignocellulosic composite. Furthermore, the presence of alkali salts and alkaline earth salts, preferably sodium nitrate, in the binder reduces the time needed to reach the target temperature at the center of the formed sheet, so that the binder hardens more efficiently. Thus, the addition of alkali salts and alkaline earth salts, preferably sodium nitrate, improves the product properties and/or the process parameters, i.e. less time is needed and energy consumption is reduced.

Another preferred additive in a process of the present invention are hydrophobing agents, preferably paraffin and mixtures comprising paraffin, more preferably paraffin emulsions. In particular, the addition of hydrophobing agents, preferably paraffin and mixtures comprising paraffin, more preferably paraffin emulsions, to the binder improves the thickness swelling after 24 hours in water at 20 °C of a resulting lignocellulosic composite. It is preferred that in step a) of the process of the present invention the mass ratio of the weight of paraffin to the weight of the lignocellulosic particles in an oven-dry state (paraffin amount) is in the range of from 0.2 % to 1.5 %. It is also preferred that the mass ratio of the weight of paraffin to the weight of all binder components present for hardening the binder via reaction with each other (paraffin/binder ratio) is in the range of from 2 % to 30 %, more preferably in the range of from 3 % to 25 %, even more preferably in the range of from 4 % to 25 %.

Further preferred additives in a process of the present invention are described above. The skilled person will select the respective amounts of said additional compounds so that the properties of the resulting binder mixture and/or of the hardened binder and/or the resulting lignocellulosic composite are tailored according to the individual requirements. In particular, the addition of such compounds leads to improved properties of the binder so that the desired viscosity, reactivity, stability and the like can be set. Furthermore, additives are selected in order to improve the properties of the resulting hardened binder and/or the resulting lignocellulosic composite. These properties preferably are, but are not limited to, the colour, durability, density and the like.

The present disclosure also relates to a lignocellulosic composite, preparable according to a process of the present invention (preferably a process of the invention as defined above or in the attached claims as being preferred), and to a product thereof, wherein the product is preferably a construction product (for a definition see below).

The lignocellulosic composite preferably is a lignocellulosic board selected from the group consisting of
- high-density fiberboard (HDF)
- medium-density fiberboard (MDF)
- low-density fiberboard (LDF)
- wood fiber insulation board
- oriented strand board (OSB)
- chipboard,
   and wherein the board is a
- single-layer board or
- multilayer board, preferably a three-layer board.

A lignocellulosic composite, preferably board, preparable according to a process of the present invention, preferably is a single-layer lignocellulosic board or a multilayer lignocellulosic board, more preferably is a single-layer lignocellulosic board. A multilayer lignocellulosic board is a board comprising at least two distinguishable (individual) layers. The multilayer lignocellulosic board is preferably a board having at least a core layer as well as an upper surface layer and a lower surface layer. The total number of layers is then three or more. If the number of layers is four or more, there are one or more intermediate layers. Preferred is a three-layer board having one core layer, an upper surface layer and a lower surface layer. This is specifically relevant if the lignocellulosic composite, preferably board, is an element of a construction product .

Particularly preferred is a single-layer lignocellulosic board that is a medium-density fiberboard (MDF) or a chipboard, even more preferably is chipboard, and a corresponding construction product comprising such single-layer lignocellulosic board.

Particularly preferred is a lignocellulosic board, which has a thickness in the range of from 3 to 30 mm, preferably in the range of from 5 to 20 mm. The preferred lignocellulosic board preferably is a component (building element) in a construction product, more preferably is a building element in furniture or parts of furniture, and most preferably is a building element in a hollow construction in furniture or parts of furniture.

The present disclosure also relates to the use of a lignocellulosic composite of the present disclosure (as defined above or preparable according to a process of the present invention, preferably as defined herein above as being preferred) as a building element in a construction product, preferably as a building element in furniture or parts of furniture, more preferably as a building element in a hollow construction in furniture or parts of furniture.

The term "construction product" as used in this text designates products used for constructions such as decking, doors, windows, floors, panels, furniture or parts of furniture. The construction product is preferably selected from the group consisting of furniture and parts of furniture.

The term "furniture" as used in this text designates all kinds of furniture. The furniture is preferably selected from the group consisting of chairs, tables, desks, closets, beds and shelves.

The term "building element" as used in this text designates lignocellulosic composite products (e.g., boards, see above) which constitute a part (element) of a construction product (e.g., a part of furniture). Such building elements preferably are parts of furniture, and more preferably such parts of furniture are selected from the group consisting of shelves, table plates, side boards or shelves or doors of cabinets, and side walls of beds.

The term "hollow construction" as used in this text designates construction products, preferably furniture, and building elements, preferably parts of furniture, comprising an amount of enclosed empty space that is not filled with construction material. Such hollow constructions allow for the making of construction products, preferably furniture, and building elements, preferably parts of furniture, which are exceptionally light and strong, although a low amount (by weight) of construction material is used. Board-on-frame (BoF) products are typical examples for such hollow constructions. In a BoF product a frame made from lignocellulosic composite products (e.g. chipboards) is covered with lignocellulosic boards (e.g. thin high-density fiberboard). A further hollow construction is a board-on-stile (BoS) product, in which stripes of lignocellulosic composite products are used instead of a complete frame.

The present disclosure also relates to the use of a heat-curable binder composition (as defined above) in a process of the present invention (preferably a process as defined herein above as being preferred).

The present disclosure also relates to the use of a dielectric heating and pressing unit (as defined above) in a process of the present invention (preferably a process as defined herein above as being preferred).

### Examples:

The following examples are meant to further explain and illustrate the present invention without limiting its scope.

The examples relate to boards 1 to 34, which are prepared by using binders 1 to 12. Tables 1 and 2, below, state the number of the respective board and the respective binder used for making it.

### 1. Measuring methods:

### 1.1 Residual particle moisture content ("drying oven method"):

The moisture content of the lignocellulosic particles used for preparing a mixture comprising lignocellulosic particles and a binder (see in particular step (a-i) of the process of the invention) was measured according to DIN EN 322:1993-08 by placing the lignocellulosic particles in a drying oven at a temperature of 103 ± 2 °C until constant mass has been reached, i.e. an oven-dry state of the lignocellulosic particles. This method is also used to check the water content of the prepared mixtures comprising lignocellulosic particles and a binder.

### 1.2 Mass ratio of the weight of the solid content of the heat-curable binder composition to the weight of the lignocellulosic particles in an oven-dry state (binder amount):

For calculating the mass ratios of the weight of the solid content of the heat-curable binder composition to the weight of the lignocellulosic particles in an oven-dry state (binder amount) in the examples according to the present invention considered is the total weight of the sum of the solid contents of the respective binder components present for hardening the binder. Such components are (ii-a) carbohydrate compounds and (ii-b) compounds having two or more amino groups, wherein the components (ii-a) and (ii-b) are capable of reacting with each other. Other additional compounds such as alkali salts and alkaline earth salts, hydrophobing agents, dyes, pigments, antifungal agents, antibacterial agents, rheology modifiers, fillers, release agents, surfactants and tensides are not included, as they do not directly participate in the hardening reaction.

### 1.3 Thickness and density of the lignocellulosic composites (boards):

The thickness and the density of the lignocellulosic composites (boards) were measured according to DIN EN 323:1993-08 and are reported as the arithmetic average of ten 50 x 50 mm samples of the same board.

### 1.4 Internal bond strength:

The internal bond strength of the lignocellulosic composites (boards) was determined according to EN 319:1993-08 and is reported as the arithmetic average of ten 50 x 50 mm samples of the same lignocellulosic composite (board).

### 1.5 Swelling in thickness ("24 h swelling"):

The swelling in thickness after 24 h ("24 h swelling") of the lignocellulosic composites (boards) was determined according to EN 317:1993-08 and is reported as the arithmetic average of ten 50 x 50 mm samples of the same lignocellulosic composite (board).

### 2. Chemicals and materials:

### 2.1 Components for hardening the binder:

### 2.1.1 Carbohydrate compounds:

Dextrose monohydrate; "Dex" (Dextrose; 90.9 wt.-%, H₂O: 9.1 wt.-%), Sigma Aldrich
Fructose; "Fru" (100%), Sigma Aldrich
Maltodextrin; "Mal" (100%, dextrose equivalent 13.0 - 17.0), Sigma Aldrich

### 2.1.2 Compounds having two or more amino groups:

Hexamethylenediamine; "HMDA" (> 99%), Acros Organic
L-lysine "Lys" (98%), Sigma Aldrich
Polylysine; "PL" (50 wt.-% in H₂O)

### 2.1.3 Synthesis of Polylysine ("PL"):

2200 g of L-lysine solution (50% in water, ADM) was heated under stirring in an oil bath (external temperature 140°C). Water was distilled off and the oil bath temperature was increased by 10°C per hour until a temperature of 180°C was reached. The reaction mixture was stirred for an additional hour at 180°C (oil bath temperature) and then pressure was slowly reduced to 200 mbar. After reaching the target pressure, distillation was continued for another 120 min. The product (Polylysine-2, Mw 2010 g/mol, measured by size exclusion chromatography with calibration against poly(2-vinylpyridine) standards) was hotly poured out of the reaction vessel, crushed after cooling and dissolved in water to give a 50 wt.-% solution.

### 2.2 Additional binder compounds:

Paraffin emulsion (Hydrowax 138, 60 wt.-% paraffin in water), Sasol

### 2.3 Liqnocellulosic particles:

Spruce wood chips (moisture content 2.0%)

### 3. Units:

### 3.1 Dielectric heating and pressing unit:

HLOP 170 press (Hoefer Presstechnik GmbH)

### 3.2 Conventional hot press (not according to the invention):

HLOP 350 press (Hoefer Presstechnik GmbH)

### 4. Preparation of heat-curable binder compositions comprising as components for hardening the binder via reaction with each other at least (ii-a) one, two or more carbohydrate compounds and (ii-b) one or two compounds having two or more amino groups, comprising hexamethylenediamine and/or polylysine:

### Binder 1:

A heat-curable binder composition was prepared by adding 10.53 g HMDA (70 wt.-% in H₂O) to a pre-reacted (30 min reaction at 60 °C) solution consisting of 32.44 g dextrose monohydrate (dextrose: 90.9 wt.-%, H₂O: 9.1 wt.-%), 29.59 g fructose (100% solid), 10.53 g hexamethylenediamine (70 wt.-% in H₂O) and 22.32 g of water. This heat-curable binder composition corresponds to a mass ratio of 40:40:20 of dextrose : fructose : HMDA.

### Binder 2:

A heat-curable binder composition was prepared by adding 21.06 g HMDA (70 wt.-% in H₂O) to a solution consisting of 32.44 g dextrose monohydrate (Dextrose: 90.9 wt.-%, H₂O: 9.1 wt.-%), 29.59 g fructose (100% solid) and 22.32 g of water. This heat-curable binder composition corresponds to a mass ratio of 40:40:20 of dextrose : fructose : HMDA.

### Binder 3:

A heat-curable binder composition was prepared by adding 13.7 g HMDA (70 wt.-% in H₂O) to a solution consisting of 35.2 g dextrose monohydrate (dextrose: 90.9 wt.-%, H₂O: 9.1 wt.-%), 32.0 g fructose (100% solid) and 45.0 g of water. This heat-curable binder composition corresponds to a mass ratio of 43.5:43.5:13 of dextrose : fructose : HMDA.

### Binder 4:

A heat-curable binder composition was prepared by adding 7.95 g HMDA (70 wt.-% in H₂O) to a solution consisting of 35.2 g dextrose monohydrate (dextrose: 90.9 wt.-%, H₂O: 9.1 wt.-%), 32.0 g fructose (100% solid) and 43.8 g of water. This heat-curable binder composition corresponds to a mass ratio of 46:46:8 of dextrose : fructose : HMDA.

### Binder 5:

A heat-curable binder composition was prepared by adding 31.6 g HMDA (70 wt.-% in H₂O) to a solution consisting of 28.3 g dextrose monohydrate (dextrose: 90.9 wt.-%, H₂O: 9.1 wt.-%), 25.8 g fructose (100% solid) and 40.2 g of water. This heat-curable binder composition corresponds to a mass ratio of 35:35:30 of dextrose : fructose : HMDA.

### Binder 6:

A heat-curable binder composition was prepared by adding 42.1 g HMDA (70 wt.-% in H₂O) to a solution consisting of 24.3 g dextrose monohydrate (dextrose: 90.9 wt.-%, H₂O: 9.1 wt.-%), 22.1 g fructose (100% solid) and 37.5 g of water. This heat-curable binder composition corresponds to a mass ratio of 30:30:40 of dextrose : fructose : HMDA.

### Binder 7:

A heat-curable binder composition was prepared by adding 29.4 g polylysine (50 wt.-% in H₂O) to a solution consisting of 32.4 g dextrose monohydrate (dextrose: 90.9 wt.-%, H₂O: 9.1 wt.-%), 29.6 g fructose (100% solid) and 34.6 g of water. This heat-curable binder composition corresponds to a mass ratio of 40:40:20 of dextrose : fructose : polylysine.

### Binder 8:

A heat-curable binder composition was prepared by adding 50.2 g polylysine (50 wt.-% in H₂O) to a solution consisting of 26.8 g dextrose monohydrate (dextrose: 90.9 wt.-%, H₂O: 9.1 wt.-%), 24.4 g fructose (100% solid) and 24.9 g of water. This heat-curable binder composition corresponds to a mass ratio of 33:33:34 of dextrose : fructose : polylysine.

### Binder 9:

A heat-curable binder composition was prepared by adding 20.3 g dextrose monohydrate (dextrose: 90.9 wt.-%, H₂O: 9.1 wt.-%) and 18.5 g fructose (100% solid) to a solution consisting of 73.8 g polylysine (50 wt.-% in H₂O) and 13.7 g of water. This heat-curable binder composition corresponds to a mass ratio of 25:25:50 of dextrose : fructose : polylysine.

### Binder 10:

A heat-curable binder composition was prepared by adding 10.2 g dextrose monohydrate (dextrose: 90.9 wt.-%, H₂O: 9.1 wt.-%) and 9.25 g fructose (100% solid) to 111 g polylysine (50 wt.-% in H₂O). This heat-curable binder composition corresponds to a mass ratio of 12.5:12.5:75 of dextrose : fructose : polylysine.

### Binder 11:

A heat-curable binder composition was prepared by adding 21.1 g HMDA (70 wt.-% in H₂O) to a solution consisting of 28.5 g dextrose monohydrate (dextrose: 90.9 wt.-%, H₂O: 9.1 wt.-%), 25.9 g fructose (100% solid), 7.38 g maltodextrin and 43.5 g of water. This heat-curable binder composition corresponds to a mass ratio of 35:35:10:20 of dextrose : fructose : maltodextrin : HMDA.

### Binder 12 (comparative example):

A heat-curable binder composition was prepared by adding 14.7 g lysine to a solution consisting of 32.4 g dextrose monohydrate (dextrose: 90.9 wt.-%, H₂O: 9.1 wt.-%), 29.6 g fructose (100% solid) and 49.4 g of water. This heat-curable binder composition corresponds to a mass ratio of 40:40:20 of dextrose : fructose : lysine.

### 5. Preparation of lignocellulosic particles:

The spruce wood chips were produced in a disc chipper. Spruce trunk sections (length 250 mm) from Germany were pressed with the long side against a rotating steel disc, into which radially and evenly distributed knife boxes are inserted, each of which consists of a radially arranged cutting knife and several scoring knives positioned at right angles to it. The cutting knife separates the chip from the round wood and the scoring knives simultaneously limit the chip length. Afterwards the produced chips were collected in a bunker and from there they were transported to a cross beater mill (with sieve insert) for reshredding with regard to chip width. Afterwards the reshredded chips were conveyed to a flash drier and dried at approx. 120 °C. The spruce wood chips were then screened into two useful fractions (B: ≤ 2.0 mm x 2.0 mm and > 0.32 mm x 0.5 mm; C: ≤ 4.0 mm x 4.0 mm and > 2.0 mm x 2.0 mm), a coarse fraction (D: > 4.0 mm x 4.0 mm), which is reshredded, and a fine fraction (A: ≤ 0.32 mm x 0.5 mm). A mixture of 60 wt.-% of fraction B and 40 wt.-% of fraction C of the spruce wood chips is used for the production of the lignocellulosic composites.

### 6. Preparation of formed sheets:

The respective binder composition, spruce wood chips, and optionally water were mixed (cf. 6.1) and formed into a sheet (cf. 6.2), as described hereafter.

### 6.1 Preparing a mixture comprising lignocellulosic particles and a heat-curable binder composition:

### Binder/chips mixture for board 1 and boards 23 to 26 (binder amount 14%):

In a mixer, 210 g of binder 1 (solid content 70%) and 40.0 g of additional water was sprayed to 1074 g of spruce wood chips (moisture content 2.0%, 1053 g oven dry wood) while mixing. After completion of the spraying, mixing in the mixer was continued for 15 sec.

### Binder/chips mixture for boards 2 and 3 and boards 27 to 34 (binder amount 10%):

In a mixer, 150 g of binder 1 or binder 2 (solid content 70%), respectively, and subsequently, 53.0 g of additional water was sprayed to 1074 g of spruce wood chips (moisture content 2.0%, 1053 g oven dry wood) while mixing. After completion of the spraying, mixing in the mixer was continued for 15 sec.

### Binder/chips mixture for boards 4 to 10, 12 to 19 (binder amount 10%):

In a mixer, 180 g of binder 3, binder 4, binder 5, binder 6, binder 7, binder 8, binder 9, binder 11 or binder 12 (solid content 58.5%), respectively, and subsequently, 23.4 g of water was sprayed to 1074 g of spruce wood chips (moisture content 2.0%, 1053 g oven dry wood) while mixing. After completion of the spraying, mixing in the mixer was continued for 15 sec.

### Binder/chips mixture for board 11 and 20 (binder amount 10%):

In a mixer, 186 g of binder 10 (solid content 56.7%), and subsequently, 17.2 g of water was sprayed to 1074 g of spruce wood chips (moisture content 2.0%, 1053 g oven dry wood) while mixing. After completion of the spraying, mixing in the mixer was continued for 15 sec.

### Binder/chips mixture for board 21 (binder amount 10%):

In a mixer, 203 g of binder 1 (solid content 70%), and subsequently, 72.0 g of water was sprayed to 1450 g of spruce wood chips (moisture content 2.0%, 1422 g oven dry wood) while mixing. After completion of the spraying, mixing in the mixer was continued for 15 sec.

### Binder/chips mixture for board 22 (binder amount 10%, with paraffin):

In a mixer, 203 g of binder 1 (solid content 70%), and subsequently, a mixture of 11.8 g (Hydrowax 138, 60 wt.-% paraffin in water) and 68.0 g of water was sprayed to 1450 g of spruce wood chips (moisture content 2.0%, 1422 g oven dry wood) while mixing. After completion of the spraying, mixing in the mixer was continued for 15 sec.

### 6.2 Forming a sheet from the mixtures so that a formed sheet results:

### Forming the sheets for boards 1 to 20 and 23 to 34:

15 min after preparation of the binder/chips mixture, 834 g of the mixture was scattered into a 320 mm x 380 mm mold and pre-pressed under ambient conditions and a pressure of 1.2 N/mm² resulting in a formed sheet.

### Forming the sheets for boards 21 to 22:

15 min after preparation of the binder/chips mixture, 1470 g of the mixture was scattered into a 320 mm x 380 mm mold and pre-pressed under ambient conditions and a pressure of 1.2 N/mm² resulting in a formed sheet.

### 7. Preparation of lignocellulosic composites:

### 7.1 Process according to the invention (one step hardening/curing):

For monitoring the temperature a fiber-optic sensor (Teflon-coated glass fiber with a gallium arsenide chip) was introduced into the center of a formed sheet, (as prepared in accordance with item 6.2) which was connected with a temperature measuring instrument suitable for measurements in an environment with strong electromagnetic radiation. The formed sheet was compacted and dielectrically heated in a dielectric heating and pressing unit (HLOP 170 press from Hoefer Presstechnik GmbH), whereby birch plywood boards (thickness 6 mm) were placed between the nonwoven separator and the press plate on each side of the sheet, wherein the formed sheet was compacted to a thickness of 10 mm or 18 mm respectively within a period of 2 s and then dielectrically heated by applying a high-frequency electrical field (27.1 MHz, anode current 2.5 A for 10 mm boards, corresponding to ca. 25kW/m², or 2.7 A for 18 mm boards) while the press was remaining closed. When a temperature of 150 °C or 170 °C, respectively, was reached in the center of the sheet, the press was opened.

One day after conditioning at ambient conditions the board was sanded (0.15 mm was sanded off on each side).

This process of the invention was used for preparing boards 1 to 22 (see Table 1) and boards 23, 24, 27, 28, 31, and 32 (see Table 2).

### 7.2 Process not according to the invention (two step hardening/curing):

### 7.2.1 Curing step:

The formed sheet was heated and compacted in a conventional hot press unit (HLOP 350 from Hoefer Presstechnik GmbH) with heated press plates at a temperature of 195°C to a thickness of 10 mm to give a cured board. The press factor was 14 s/mm, corresponding to a total press time of 140 seconds.

### 7.2.2 Post-curing step (heating without pressing):

5 min after finishing the curing step, the cured board was placed in a radio-frequency post-curing unit and heated with a radio frequency field (27.1 MHz, anode current 2.5 A, corresponding to ca. 25 kW/m²) to a temperature in the center of the board of 150 °C or 170 °C, respectively. For monitoring the temperature a fiber-optic sensor was used as described above. For this heating step, the HLOP 170 press from Hoefer Presstechnik GmbH was again used (see item 7.1, above), whereby during heating there was a 1 mm gap between the upper press plate and the surface of the board. Thus, no pressure was applied during heating.

One day after conditioning at ambient conditions the board was sanded (0.15 mm was sanded off on each side).

This process (not according to the invention) was used for preparing boards 25, 26, 29, 30, 33, and 34.

### 8. Results:

### 8.1 Results for lignocellulosic composites (boards) prepared according to a process of the present invention (see item 7.1, above):

Table 1 shows parameters of production and of the resulting lignocellulosic composites (boards), i.e. of boards no. 1 to 22. Herein, boards 1 to 12 and 14 to 22 were produced in a process according to the present invention, board 13 is a comparative example.

Such parameters of production and of the resulting lignocellulosic composites (boards) are:
- the chemical "composition" of the binder (using abbreviations as described above)
- the "mass ratio" of the binder components in brackets below the chemical composition
- the "binder amount" (ratio of the weight of the solid content of all binder components present for hardening the binder via reaction with each other to the weight of the lignocellulosic particles in an oven-dry state)
- the "temperature at the center", i.e. the predetermined target temperature to be reached and during preparation actually reached at the center of the formed sheet
- the "time of dielectric heating" (time period of applying a high-frequency electrical field) until said target temperature in the center of the formed sheet was reached
- the "thickness" and "density", both measured according to DIN EN 323:1993-08
- the "internal bond strength", measured according to EN 319:1993
- the "24 h swelling", i.e. the thickness swelling after 24 hours in water at 20 °C, determined according to DIN EN 317:1993-08.

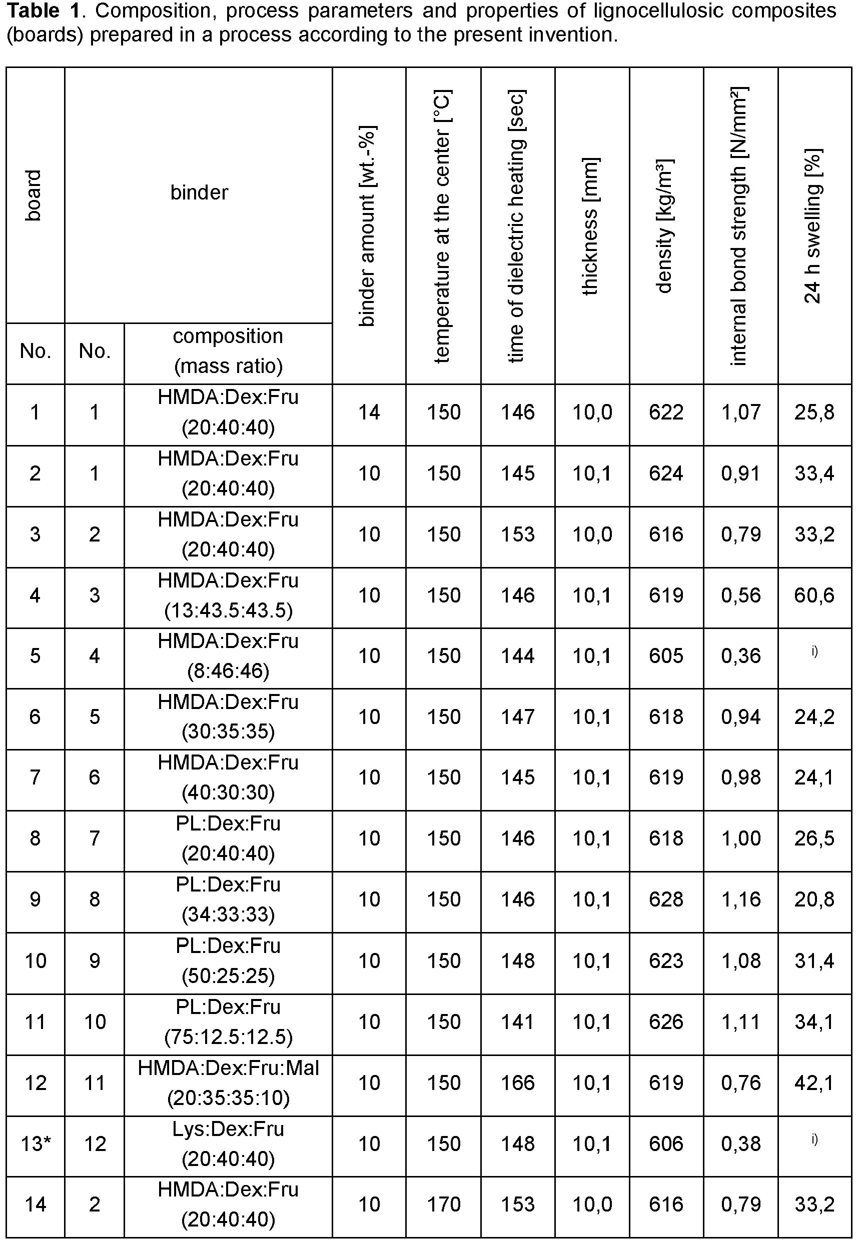

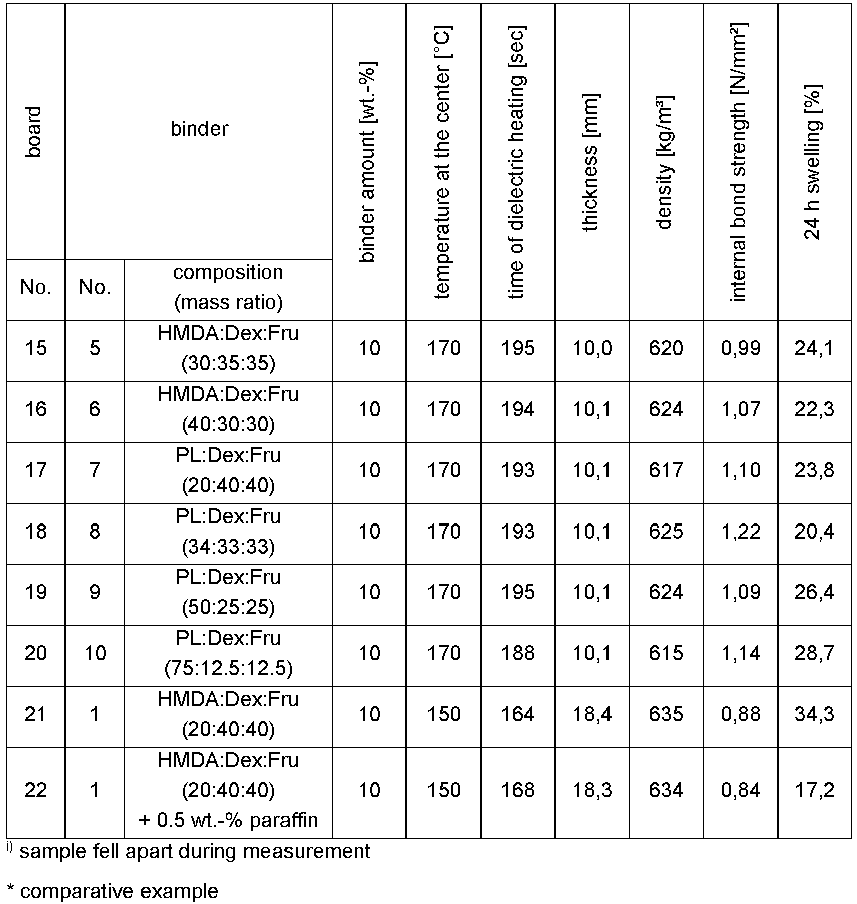

The results show that in each case a lignocellulosic composite was prepared according to a process of the present invention, wherein the individual lignocellulosic composite, i.e. board 1 to 22, is a board with a thickness of 10±0.2 mm or a board with a thickness of 18±0.4 mm, respectively.

All boards that were prepared according to a process of the present invention have a density of more than 600 kg/m³ (measured according to DIN EN 323:1993-08).

All boards 1 to 3, 6 to 12, and 14 to 22 that were prepared according to a process of the present invention have:
- a density of more than 610 kg/m³ (measured according to DIN EN 323:1993-08)
- an internal bond strength of more than 0.7 N/mm² (measured according to EN 319:1993), and
- a thickness swelling after 24 hours in water at 20 °C, determined according to DIN EN 317:1993-08, of less than 45%.

Board 4 and 5 were produced in accordance with the present invention, but are not as satisfactory as board 3. As stated in table 1, board 3 is based on binder 2 and comprises HMDA:Dex:Fru (20:40:40). In contrast, board 4 is based on binder 3 and comprises HMDA:Dex:Fru (13:43.5:43.5), and board 5 is based on binder 4 and comprises HMDA:Dex:Fru (8:46:46). The results summarized in table 1 show that binder 4 results in a board 5 having less favourable properties than boards 4 and 3. Similarly, binder 3 results in board 4 having less favourable properties than board 3. Thus, when dextrose and fructose are used in a mass ratio of 1:1 as the carbohydrate component of the heat-curable binder composition, the amount of HMDA should be 10 wt.-% or higher, preferably 15 wt.-% or higher, based on the (total) solid content of the heat-curable binder composition.

More generally, it is preferred that in a process of the present invention the ratio of the mass of all compounds present in component (ii-a), i.e. all carbohydrate compounds, to the mass of all compounds present in component (ii-b), i.e. all compounds having two or more amino groups, is in the range of from 90:10 to 50:50, preferably in a range of from 85:15 to 60:40, more preferably in a range of from 82:18 to 60:40.

Board 13 is based on binder 12 and thus constitutes a comparative example. Lysine is used as the compound having two or more amino groups in binder 12 instead of hexamethylenediamine and/or polylysine. A comparison with board 8 based on binder 7 comprising polylysine as the compound having two or more amino groups shows that the use of polylysine is beneficial in comparison with the use of lysine.

When polylysine is used as the only compound having two or more amino groups or as one of the two or more compounds having two or more amino groups in component (ii-b) of the heat-curable binder composition used in accordance with the present invention, it is generally preferred that the heat-curable binder composition has a ratio of the mass of all compounds present in said component (ii-a) to the mass of all compounds present in said component (ii-b) in the range of from 10:90 to 90:10, preferably in the range of from 20:80 to 80:20.

These results also show that a (carbohydrate based) heat-curable binder composition according to the present invention can be effectively hardened in a simple one step hardening process according to the present invention. Accordingly, a formed sheet comprising lignocellulosic particles and a (carbohydrate based) heat-curable binder composition is effectively hardened in a dielectric heating and pressing unit by at least temporarily simultaneously compacting and dielectrically heating the formed sheet so that the heat-curable binder composition hardens and a lignocellulosic composite with excellent properties results.

The time of dielectric heating (time of applying a high-frequency electrical field) required to reach the target temperature T in the center of the formed sheet of 150 °C (boards no. 1 to 13 and 21 to 22) or 170 °C (boards no. 14 to 20) was in the range of from 141 s to 168 s (for T = 150 °C) or in the range of from 153 s to 195 s (for T = 170 °C).

The results of boards no. 2 to 22 further show that the ratio of the weight of the solid content of all binder components present for hardening the binder via reaction with each other to the weight of the lignocellulosic particles in an oven-dry state ("binder amount") can be as low as 10 wt.-%, still resulting in a lignocellulosic composite with excellent properties.

8.2 Further exemplary experiments were conducted which were identical with the experiments conducted with respect to boards 1 to 3, 6 to 12, and 14 to 22 (see above), with the exception that only a binder amount of 6 wt.-% was used. In each case boards having satisfactory properties (thickness, density, internal bond strength, and 24h swelling) were obtained. Specifically, in each case the internal bond strength was > 0.45 N/mm². Thus, even with a binder amount of 6 wt.-% (or lower) boards can be produced which meet the typical requirements of furniture industry.

8.3 *Results for lignocellulosic composites (boards) prepared according to a process of the present invention (one step hardening by dielectric heating,* cf. 7.1 *above) in comparison to lignocellulosic composites (boards) prepared according to a process not according to present invention (two step hardening, cf. 7.2 above):*
Table 2 shows parameters of production and of the resulting lignocellulosic composites (boards), i.e. of boards no. 23 to 34. Boards 23, 24, 27, 28, 31 and 32 were produced in a process according to the present invention. Boards 25, 26, 29, 30, 33 and 34 were produced in a process not according to the present invention. All of the boards 23 to 34 have a thickness, measured according to DIN EN 323:1993-08, of 10±0.2 mm.

Such parameters of production and of the resulting lignocellulosic composites (boards) depicted in table 2 are:
- the process used; process (1): according to the present invention, see item 7.1; process (2): not according to the present invention, see item 7.2
- the "binder amount" (ratio of the weight of the solid content of all binder components present for hardening the binder via reaction with each other to the weight of the lignocellulosic particles in an oven-dry state)
- the "temperature HF press", i.e. the predetermined target temperature to be reached and during preparation actually reached at the center of the formed sheet by dielectric heating in the process of the present invention
- the "temperature post-curing", i.e. the predetermined target temperature to be reached and during preparation actually reached at the center of the cured composite in the post-curing step of the process which is not in accordance with the present invention.
- the "press time", i.e. the time of compacting and dielectric heating (applying a high-frequency electrical field) until said target temperature in the center of the formed sheet was reached in the process of the invention (1) or the time of compacting and heating with press plates at a temperature of 195 °C in the curing step of process (2) which is not in accordance with the invention
- the "post-curing time", i.e. the time that the cured board was placed in a radio-frequency post-curing unit and heated with a radio frequency field
- the "total time of process", i.e. the time required for one-step hardening in process (1) according to the invention (time period of applying a high-frequency electrical field until said target temperature in the center of the formed sheet was reached) or the time required for two-step hardening in process (2) not according to the invention (sum of "press time" and "post-curing time") respectively
- the "density" measured according to DIN EN 323:1993-08
- the internal bond strength, measured according to EN 319:1993
- the "24 h swelling", i.e. the thickness swelling after 24 hours in water at 20 °C, determined according to DIN EN 317:1993-08.

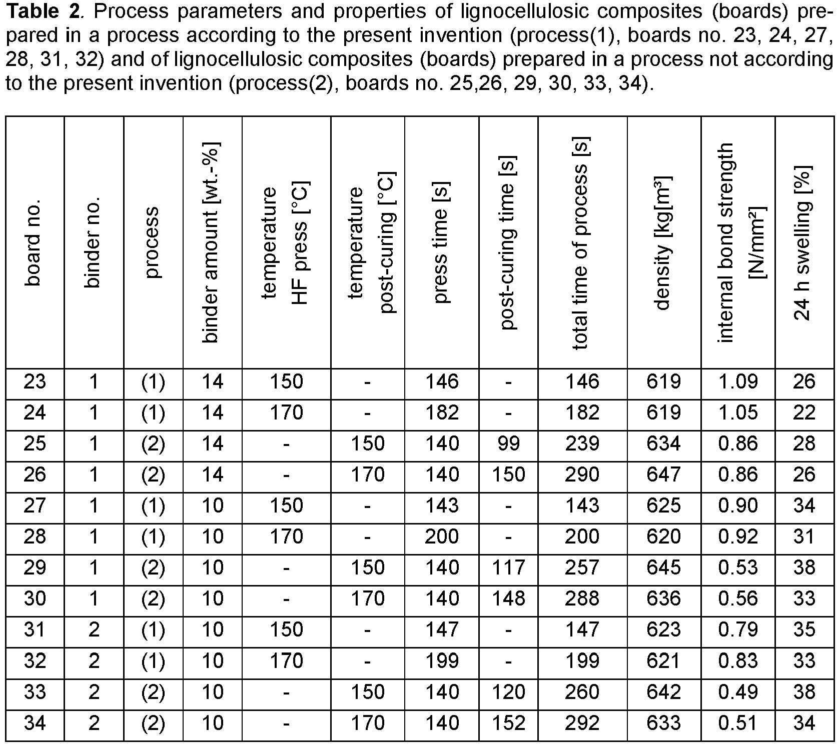

The results summarized in Table 2 confirm that surprisingly boards obtained in a process of the present invention in direct comparison with boards prepared in a process not according to the invention (because instead of using a dielectric heating and pressing unit, a conventional hot press was used and an additional post-curing step was conducted) have improved properties (in particular internal bond strength and 24 h swelling). Furthermore, these improved properties were obtained within a total time of process that was in each case shorter than the corresponding total time of process for the experiments that were not in accordance with the present invention.

Thus, the process of the present invention is well suited for making boards and is surprisingly better suited than the conventional processes known from the prior art.

## Claims

1. Process of producing a lignocellulosic composite or a product thereof, comprising at least the following steps:
a) making a formed sheet by
(a-i) preparing a mixture comprising
(i) lignocellulosic particles
and
(ii) a heat-curable binder composition comprising as components for hardening the binder via reaction with each other at least
(ii-a) one, two or more carbohydrate compounds and
(ii-b) one or two compounds having two or more amino groups, comprising hexamethylenediamine and/or polylysine
and
(a-ii) forming a sheet from said mixture obtained in step (a-i),
so that the formed sheet results,
b) in a dielectric heating and pressing unit, at least temporarily simultaneously compacting and dielectrically heating the formed sheet as resulting in step a) so that the heat-curable binder composition hardens and the lignocellulosic composite results,
wherein producing the lignocellulosic composite is part of a continuous production of lignocellulosic composites,
wherein in step a) and also in step b) before dielectrically heating the formed sheet
- the maximum temperature within the heat-curable binder composition is below 80 °C, and/or
- the maximum temperature at the center of the formed sheet is below 70 °C.

2. Process according to claim 1,
wherein the lignocellulosic composite is a multilayer lignocellulosic board comprising at least two distinguishable layers,
wherein the multilayer lignocellulosic board is
preferably a board having at least a core layer as well as an upper surface layer and a lower surface layer, the total number of layers is then three or more, wherein preferably at least a core layer comprises a heat-curable binder composition comprising as components for hardening the binder via reaction with each other at least
(ii-a) one, two or more carbohydrate compounds
and
(ii-b) one or two compounds having two or more amino groups, comprising hexamethylenediamine and/or polylysine,
and is
more preferably a three-layer board having one core layer, an upper surface layer and a lower surface layer, wherein preferably at least the core layer comprises a heat-curable binder composition comprising as components for hardening the binder via reaction with each other at least
(ii-a) one, two or more carbohydrate compounds
and
(ii-b) one or two compounds having two or more amino groups, comprising hexamethylenediamine and/or polylysine.

3. Process according to any preceding claim, wherein the process comprises one or both of the following steps:
- continuously making a formed sheet according to step a), preferably by continuously scattering lignocellulosic particles and mixing said particles with a heat-curable binder composition
and
- continuously at least temporarily simultaneously compacting and dielectrically heating the formed sheet as resulting in step a) so that the heat-curable binder composition hardens and the lignocellulosic composite results.

4. Process according to any preceding claim, wherein the formed sheet as resulting in step a) is
- introduced into the dielectric heating and pressing unit employed in step b) in less than 1 minute after termination of step a), preferably in less than 30 seconds, more preferably in less than 10 seconds,
and/or
- subjected to at least temporarily simultaneously compacting and dielectrically heating so that the heat-curable binder composition hardens and the lignocellulosic composite results, wherein the time period between termination of step a) and the start of at least temporarily simultaneously compacting and dielectrically heating is less than 3 minutes, preferably less than 1 minute, more preferably less than 30 seconds, even more preferably less than 10 seconds.

5. Process according to any preceding claim, wherein step a) is conducted so that the formed sheet as resulting in step a) has, and wherein preferably also step b) is conducted so that the formed sheet before dielectrically heating has:
- an internal bond strength of < 0.05 N/mm², preferably < 0.04 N/mm², and more preferably < 0.03 N/mm², measured according to EN 319:1993
and/or
- a modulus of elasticity in bending of < 500 N/mm², preferably < 400 N/mm², and more preferably < 300 N/mm², measured according to EN 310:1993
and/or
- a bending strength of < 3 N/mm², preferably < 2 N/mm², and more preferably < 1 N/mm², measured according to EN 310:1993.

6. Process according to any preceding claim, wherein step b) is conducted so that
- the internal bond strength of the resulting lignocellulosic composite is
at least 0.2 N/mm², preferably at least 0.25 N/mm² and more preferably at least 0.3 N/mm², measured according to EN 319:1993
and/or
at least 10 times as high as the internal bond strength of the formed sheet as resulting in step a)
and/or
- the modulus of elasticity in bending of the resulting lignocellulosic composite is
at least 1200 N/mm², preferably at least 1500 N/mm² and more preferably at least 1800 N/mm², measured according to EN 310:1993
and/or
at least 10 times as high as the modulus of elasticity in bending of the formed sheet as resulting in step a)
and/or
- the bending strength of the resulting lignocellulosic composite is
at least 7 N/mm², preferably at least 10 N/mm² and more preferably at least 13 N/mm², measured according to EN 310:1993
and/or
at least 10 times as high as the bending strength of the formed sheet as resulting in step a).

7. Process according to any preceding claim, wherein
- step a) is conducted so that the conversion of said
(ii-a) one, two or more carbohydrate compounds
and/or
(ii-b) one or two compounds having two or more amino groups, comprising hexamethylenediamine and/or polylysine
after step a) is below 0.2, preferably below 0.1, more preferably below 0.05, based on the respective total amount of the compounds used for preparing the mixture in step (a-i)
and/or
- step b) before dielectrically heating is conducted so that the conversion of said
(ii-a) one, two or more carbohydrate compounds
and/or
(ii-b) one or two compounds having two or more amino groups, comprising hexamethylenediamine and/or polylysine
before dielectrically heating is below 0.2, preferably below 0.1, more preferably below 0.05, based on the respective total amount of the compounds used for preparing the mixture in step (a-i)
and/or
- step b) is conducted so that the conversion of said
(ii-a) one, two or more carbohydrate compounds and/or
(ii-b) one or two compounds having two or more amino groups, comprising hexamethylenediamine and/or polylysine
after step b) is above 0.5, preferably above 0.8, more preferable above 0.9, based on the respective total amount of the compounds used for preparing the mixture in step (a-i).

8. Process according to any preceding claim, wherein in step b) the formed sheet is dielectrically heated to a maximum temperature at the center of the formed sheet of at least 130 °C, preferably of at least 140 °C, more preferably of at least 150 °C.

9. Process according to any preceding claim, wherein the formed sheet is compacted in step b) with press plates having a maximum temperature of below 125 °C, preferably below 110 °C, at the beginning of the compacting.

10. Process according to any preceding claim, wherein in step b) of at least temporarily simultaneously compacting and dielectrically heating the formed sheet the maximum temperature at the center of the formed sheet is at least 5° C higher, preferably at least 10 °C higher, more preferably at least 20 °C higher, than the maximum temperature of the press plates at the beginning of the compacting.

11. Process according to any preceding claim, comprising the additional step of:
pre-b) before step b), preferably before step a), determining one, two or more parameters of the lignocellulosic composite to be produced,
wherein the process conditions for step b) are selected so that said one, two or more parameters are present in the lignocellulosic composite resulting in step b),
wherein the one parameter is or two or more of said parameters are selected from the group consisting of:
- an internal bond strength, determined according to EN 319:1993-08 of at least 0.2 N/mm², preferably at least 0.25 N/mm², more preferably at least 0.3 N/mm², and most preferably at least 0.35 N/mm²
- a thickness swelling after 24 hours in water at 20 °C, determined according to DIN EN 317:1993-08, of less than 70 %, preferably less than 60 %, more preferably less than 50 %, and most preferably less than 40 %
- a maximum density deviation within the lignocellulosic composite, wherein in a cross section oriented perpendicularly to the plane of the lignocellulosic composite the difference between the density maximum of the lignocellulosic composite and the density minimum in the core of the lignocellulosic composite is at most 100 kg/m³.

12. Process according to any preceding claim, wherein the process conditions in step b) are selected so that
- the maximum temperature at the center of the formed sheet is reached in less than 200 s, preferably in less than 180 s, more preferably in less than 160 s, after the start of dielectrically heating the formed sheet,
and/or
- the maximum temperature at the center of the formed sheet is reached in less than 40 s·(d/mm), preferably in less than 30 s·(d/mm), more preferably in less than 20 s·(d/mm) after the start of dielectrically heating the formed sheet, where d is the thickness of the lignocellulosic composite in mm at the end of step b),
and/or
- more than 95%, preferably more than 97%, more preferably more than 99%, per mole of the total amount of carbohydrate compounds as present in component (ii-a) react and/or more than 95%, preferably more than 97%, more preferably more than 99%, per mole of the total amount of compounds having two or more amino groups as present in component (ii-b) react.

13. Process according to any preceding claim, wherein the heat-curable binder composition comprises as components for hardening the binder via reaction with each other at least
(ii-a) one, two or more, preferably bio based, carbohydrate compounds, selected from the group consisting of
- monosaccharides, disaccharides, oligosaccharides, polysaccharides and starch,
preferably monosaccharides selected from the group consisting of pentoses and hexoses
even more preferably the one, two or more, preferably bio based, carbohydrate compounds are glucose and/or fructose,
and
(ii-b) one or two, preferably bio based, compounds having two or more amino groups, comprising hexamethylenediamine and/or polylysine.

14. Process according to any preceding claim, wherein
- the mixture of step a) comprises (i) lignocellulosic particles and (ii) a heat-curable binder composition, wherein the mass ratio of the weight of the solid content of the heat-curable binder composition to the weight of the lignocellulosic particles in an oven-dry state is less than 0,18, preferably less than 0,16, more preferably less than 0,15,
and/or
- the heat-curable binder composition of step a) comprises as components for hardening the binder via reaction with each other at least (ii-a) one, two or more, preferably bio based, carbohydrate compounds and (ii-b) one or two, preferably bio based, compounds having two or more amino groups, comprising hexamethylenediamine and/or polylysine, wherein none of the compounds having two or more amino groups is polylysine, wherein the ratio of the mass of all compounds present in said component (ii-a) to the mass of all compounds present in said component (ii-b) is in the range of from 90:10 to 50:50, preferably in a range of from 85:15 to 60:40, more preferably in a range of from 82:18 to 70:30,
and/or
- the heat-curable binder composition of step a) comprises as components for hardening the binder via reaction with each other at least (ii-a) one, two or more, preferably bio based, carbohydrate compounds and (ii-b) one or two, preferably bio based, compounds having two or more amino groups, comprising hexamethylenediamine and/or polylysine, wherein the one or one of the two compounds having two or more amino groups is polylysine, wherein the ratio of the mass of all compounds present in said component (ii-a) to the mass of all compounds present in said component (ii-b) is in the range of from 10:90 to 90:10, preferably in a range of from 20:80 to80:20.

## Patentansprüche

1. Verfahren zur Herstellung eines lignocellulosehaltigen Verbundstoffs oder eines Produkts davon, umfassend wenigstens die folgenden Schritte:
a) Herstellen einer geformten Bahn durch
(a-i) Herstellen eines Gemischs umfassend
(i) lignocellulosehaltige Partikel
und
(ii) eine wärmehärtbare Bindemittelzusammensetzung umfassend als Komponenten zum Härten des Bindemittels durch Reaktion miteinander wenigstens
(ii-a) eine, zwei oder mehr Kohlenhydratverbindungen und
(ii-b) eine oder zwei Verbindungen mit zwei oder mehr Aminogruppen, umfassend Hexamethylendiamin und/oder Polylysin
und
(a-ii) Formen einer Bahn aus dem bei Schritt (a-i) erhaltenen Gemisch,
so dass die geformte Bahn erhalten wird,
b) in einer dielektrischen Heiz- und Presseinheit wenigstens zeitweilig gleichzeitiges Verdichten und dielektrisches Erhitzen der wie bei Schritt a) erhaltenen geformten Bahn, so dass die wärmehärtbare Bindemittelzusammensetzung härtet und der lignocellulosehaltige Verbundstoff erhalten wird,
wobei Herstellen des lignocellulosehaltigen Verbundstoffs Teil einer kontinuierlichen Produktion von lignocellulosehaltigen Verbundstoffen ist,
wobei bei Schritt a) und auch bei Schritt b) vor dielektrischem Erhitzen der geformten Bahn
- die höchste Temperatur in der wärmehärtbaren Bindemittelzusammensetzung unter 80 °C beträgt, und/oder
- die höchste Temperatur in der Mitte der geformten Bahn unter 70 °C beträgt.

2. Verfahren nach Anspruch 1,
wobei der lignocellulosehaltige Verbundstoff eine mehrschichtige lignocellulosehaltige Platte ist, die wenigstens zwei unterscheidbare Schichten umfasst,
wobei die mehrschichtige lignocellulosehaltige Platte vorzugsweise eine Platte mit wenigstens einer Kernschicht und einer oberen Oberflächenschicht und einer unteren Oberflächenschicht ist, wobei die Gesamtzahl von Schichten dann drei oder mehr beträgt, wobei vorzugsweise wenigstens eine Kernschicht eine wärmehärtbare Bindemittelzusammensetzung umfasst, die als Komponenten zum Härten des Bindemittels durch Reaktion miteinander wenigstens umfasst
(ii-a) eine, zwei oder mehr Kohlenhydratverbindungen und
(ii-b) eine oder zwei Verbindungen mit zwei oder mehr Aminogruppen, umfassend Hexamethylendiamin und/oder Polylysin,
und
bevorzugter eine dreischichtige Platte mit einer Kernschicht, einer oberen Oberflächenschicht und einer unteren Oberflächenschicht ist, wobei vorzugsweise wenigstens die Kernschicht eine wärmehärtbare Bindemittelzusammensetzung umfasst, die als Komponenten zum Härten des Bindemittels durch Reaktion miteinander wenigstens umfasst
(ii-a) eine, zwei oder mehr Kohlenhydratverbindungen und
(ii-b) eine oder zwei Verbindungen mit zwei oder mehr Aminogruppen, umfassend Hexamethylendiamin und/oder Polylysin.

3. Verfahren nach einem der vorstehenden Ansprüche, wobei das Verfahren einen oder beide der folgenden Schritte umfasst:
- kontinuierliches Herstellen einer geformten Bahn gemäß Schritt a), vorzugsweise durch kontinuierliches Streuen von lignocellulosehaltigen Partikeln und Mischen der Partikel mit einer wärmehärtbaren Bindemittelzusammensetzung
und
- kontinuierlich wenigstens zeitweilig gleichzeitiges Verdichten und dielektrisches Erhitzen der wie bei Schritt a) erhaltenen geformten Bahn, so dass die wärmehärtbare Bindemittelzusammensetzung härtet und der lignocellulosehaltige Verbundstoff erhalten wird.

4. Verfahren nach einem der vorstehenden Ansprüche, wobei die bei Schritt a) erhaltene geformte Bahn
- innerhalb von weniger als 1 Minute nach dem Abschluss von Schritt a), vorzugsweise innerhalb von weniger als 30 Sekunden, bevorzugter innerhalb von weniger als 10 Sekunden, in die bei Schritt b) eingesetzte dielektrische Heiz- und Presseinheit eingeführt wird,
und/oder
- wenigstens zeitweilig gleichzeitigem Verdichten und dielektrischem Erhitzen unterworfen wird, so dass die wärmehärtbare Bindemittelzusammensetzung härtet und der lignocellulosehaltige Verbundstoff erhalten wird, wobei die Zeitspanne zwischen Abschluss von Schritt a) und Beginn von wenigstens zeitweilig gleichzeitigem Verdichten und dielektrischem Erhitzen weniger als 3 Minuten, vorzugsweise weniger als 1 Minute, bevorzugter weniger als 30 Sekunden, noch bevorzugter weniger als 10 Sekunden beträgt.

5. Verfahren nach einem der vorstehenden Ansprüche, wobei Schritt a) so durchgeführt wird, dass die wie bei Schritt a) erhaltene geformte Bahn aufweist, und wobei vorzugsweise auch Schritt b) so durchgeführt wird, dass die geformte Bahn vor dielektrischem Erhitzen Folgendes aufweist:
- eine interne Bindungsstärke von < 0,05 N/mm², vorzugsweise < 0,04 N/mm² und bevorzugter < 0,03 N/mm², gemessen nach EN 319:1993,
und/oder
- einen Elastizitätsmodul bei der Biegung von < 500 N/mm², vorzugsweise < 400 N/mm² und bevorzugter < 300 N/mm², gemessen nach EN 310:1993,
und/oder
- eine Biegefestigkeit von < 3 N/mm², vorzugsweise < 2 N/mm² und bevorzugter < 1 N/mm², gemessen nach EN 310:1993.

6. Verfahren nach einem der vorstehenden Ansprüche, wobei Schritt b) so durchgeführt wird, dass
- die interne Bindungsstärke des erhaltenen lignocellulosehaltigen Verbundstoffs
wenigstens 0,2 N/mm², vorzugsweise wenigstens 0,25 N/mm² und bevorzugter wenigstens 0,3 N/mm² beträgt, gemessen nach EN 319:1993,
und/oder
wenigstens 10-mal so hoch ist wie die interne Bindungsstärke der wie bei Schritt a) erhaltenen geformten Bahn
und/oder
- der Elastizitätsmodul bei Biegung des erhaltenen lignocellulosehaltigen Verbundstoffs
wenigstens 1200 N/mm², vorzugsweise wenigstens 1500 N/mm² und bevorzugter wenigstens 1800 N/mm² beträgt, gemessen nach EN 310:1993,
und/oder
wenigstens 10-mal so hoch ist wie der Elastizitätsmodul bei Biegen der wie bei Schritt a) erhaltenen geformten Bahn,
und/oder
- die Biegefestigkeit des erhaltenen lignocellulosehaltigen Verbundstoffs
wenigstens 7 N/mm², vorzugsweise wenigstens 10 N/mm² und bevorzugter wenigstens 13 N/mm² beträgt, gemessen nach EN 310:1993,
und/oder
wenigstens 10-mal so hoch ist wie die Biegefestigkeit der wie bei Schritt a) erhaltenen geformten Bahn.

7. Verfahren nach einem der vorstehenden Ansprüche, wobei
- Schritt a) so durchgeführt wird, dass die Umwandlung der
(ii-a) einen, zwei oder mehr Kohlenhydratverbindungen und/oder
(ii-b) einen oder zwei Verbindungen mit zwei oder mehr Aminogruppen, umfassend Hexamethylendiamin und/oder Polylysin
nach Schritt a) unter 0,2 beträgt, vorzugsweise unter 0,1, bevorzugter unter 0,05, bezogen auf die entsprechende Gesamtmenge der zur Herstellung des Gemischs bei Schritt (a-i) verwendeten Verbindungen, und/oder
- Schritt b) vor dielektrischem Erhitzen durchgeführt wird, so dass die Umwandlung der
(ii-a) einen, zwei oder mehr Kohlenhydratverbindungen und/oder
(ii-b) einen oder zwei Verbindungen mit zwei oder mehr Aminogruppen, umfassend Hexamethylendiamin und/oder Polylysin
vor dielektrischem Erhitzen unter 0,2 beträgt, vorzugsweise unter 0,1, bevorzugter unter 0,05, bezogen auf die entsprechende Gesamtmenge der zur Herstellung des Gemischs bei Schritt (a-i) verwendeten Verbindungen, und/oder
- Schritt b) so durchgeführt wird, dass die Umwandlung der
(ii-a) einen, zwei oder mehr Kohlenhydratverbindungen und/oder
(ii-b) einen oder zwei Verbindungen mit zwei oder mehr Aminogruppen, umfassend Hexamethylendiamin und/oder Polylysin
nach Schritt b) über 0,5 beträgt, vorzugsweise über 0,8, bevorzugter über 0,9, bezogen auf die entsprechende Gesamtmenge der zur Herstellung des Gemischs bei Schritt (a-i) verwendeten Verbindungen.

8. Verfahren nach einem der vorstehenden Ansprüche, wobei bei Schritt b) die geformte Bahn dielektrisch auf eine höchste Temperatur in der Mitte der geformten Bahn von 130 °C erhitzt wird, vorzugsweise wenigstens 140 °C, bevorzugter wenigstens 150 °C.

9. Verfahren nach einem der vorstehenden Ansprüche, wobei die geformte Bahn bei Schritt b) mit Pressplatten mit einer höchsten Temperatur von unter 125 °C, vorzugsweise unter 110 °C, zu Beginn der Verdichtung verdichtet wird.

10. Verfahren nach einem der vorstehenden Ansprüche, wobei bei Schritt b) des wenigstens zeitweilig gleichzeitigen Verdichtens und dielektrischen Erhitzens der geformten Bahn die höchste Temperatur in der Mitte der geformten Bahn wenigstens 5 °C höher, vorzugsweise wenigstens 10 °C höher, bevorzugter wenigstens 20 °C höher ist als die höchste Temperatur der Pressplatten zu Beginn des Verdichtens.

11. Verfahren nach einem der vorstehenden Ansprüche, umfassend den zusätzlichen Schritt:
Prä-b) vor Schritt b), vorzugsweise vor Schritt a), Bestimmen von einem, zwei oder mehr Parametern des lignocellulosehaltigen Verbundstoffs, der hergestellt werden soll,
wobei die Verfahrensbedingungen für Schritt b) so ausgewählt werden, dass der eine, die zwei oder mehr Parameter in dem bei Schritt b) erhaltenen lignocellulosehaltigen Verbundstoff vorliegen,
wobei der eine Parameter oder zwei oder mehr der Parameter ausgewählt ist/sind aus der Gruppe bestehend aus:
- einer internen Bindungsstärke, bestimmt nach EN 319:1993-08, von wenigstens 0,2 N/mm², vorzugsweise wenigstens 0,25 N/mm², bevorzugter wenigstens 0,3 N/mm² und höchst bevorzugt wenigstens 0,35 N/mm²,
- einem Dickequellen nach 24 Stunden in Wasser bei 20 °C, bestimmt nach DIN EN 317:1993-08, von weniger als 70 %, vorzugsweise weniger als 60 %, bevorzugter weniger als 50 % und höchst bevorzugt weniger als 40 %,
- einer maximalen Dichteabweichung innerhalb des lignocellulosehaltigen Verbundstoffs, bei der in einem senkrecht zu der Ebene des lignocellulosehaltigen Verbundstoffs orientierten Querschnitt die Differenz zwischen dem Dichtemaximum des lignocellulosehaltigen Verbundstoffs und dem Dichteminimum in dem Kern des lignocellulosehaltigen Verbundstoffs höchstens 100 kg/m³ beträgt.

12. Verfahren nach einem der vorstehenden Ansprüche, wobei die Verfahrensbedingungen bei Schritt b) so ausgewählt werden, dass
- die höchste Temperatur in der Mitte der geformten Bahn innerhalb von weniger als 200 s, vorzugsweise innerhalb von weniger als 180 s, bevorzugter innerhalb von weniger als 160 s, nach dem Beginn des dielektrischen Erhitzens der geformten Bahn erreicht wird,
und/oder
- die höchste Temperatur in der Mitte der geformten Bahn innerhalb von weniger als 40 s·(d/mm), vorzugsweise innerhalb von weniger als 30 s·(d/mm), bevorzugter innerhalb von weniger als 20 s·(d/mm), nach dem Beginn des dielektrischen Erhitzens der geformten Bahn erreicht wird, wobei d die Dicke des lignocellulosehaltigen Verbundstoffs in mm am Ende von Schritt b) ist, und/oder
- mehr als 95 %, vorzugsweise mehr als 97 %, bevorzugter mehr als 99 %, pro Mol der Gesamtmenge an Kohlenhydratverbindungen, wie in Komponente (ii-a) vorhanden, reagieren und/oder mehr als 95 %, vorzugsweise mehr als 97 %, bevorzugter mehr als 99 %, pro Mol der Gesamtmenge an Verbindungen mit zwei oder mehr Aminogruppen, wie in Komponente (ii-b) vorhanden, reagieren.

13. Verfahren nach einem der vorstehenden Ansprüche, wobei die wärmehärtbare Bindemittelzusammensetzung als Komponenten zum Härten des Bindemittels durch Reaktion miteinander wenigstens umfasst
(ii-a) eine, zwei oder mehr, vorzugsweise biobasierte, Kohlenhydratverbindungen ausgewählt aus der Gruppe bestehend aus
- Monosacchariden, Disacchariden, Oligosacchariden, Polysacchariden und Stärke,
vorzugsweise Monosacchariden ausgewählt aus der Gruppe bestehend aus Pentosen und Hexosen,
wobei bevorzugter die eine, zwei oder mehr, vorzugsweise biobasierten, Kohlenhydratverbindungen Glucose und/oder Fructose sind,
und
(ii-b) eine oder zwei, vorzugsweise biobasierte, Verbindungen mit zwei oder mehr Aminogruppen, umfassend Hexamethylendiamin und/oder Polylysin.

14. Verfahren nach einem der vorstehenden Ansprüche, wobei
- das Gemisch von Schritt a) (i) lignocellulosehaltige Partikel und (ii) eine wärmehärtbare Bindemittelzusammensetzung umfasst, wobei das Masseverhältnis des Gewichts des Feststoffgehalts der wärmehärtbaren Bindemittelzusammensetzung zu dem Gewicht der lignocellulosehaltigen Partikel in einem ofentrockenen Zustand weniger als 0,18, vorzugsweise weniger als 0,16, bevorzugter weniger als 0,15, beträgt, und/oder
- die wärmehärtbare Bindemittelzusammensetzung von Schritt a) als Komponenten zum Härten des Bindemittels durch Reaktion miteinander wenigstens (ii-a) eine, zwei oder mehr, vorzugsweise biobasierte, Kohlenhydratverbindungen und (ii-b) eine oder zwei, vorzugsweise biobasierte, Verbindungen mit zwei oder mehr Aminogruppen, umfassend Hexamethylendiamin und/oder Polylysin, umfasst, wobei keine der Verbindungen mit zwei oder mehr Aminogruppen Polylysin ist, wobei das Verhältnis der Masse aller in der Komponente (ii-a) vorhandenen Verbindungen zu der Masse aller in der Komponente (ii-b) vorhandenen Verbindungen in dem Bereich von 90:10 bis 50:50, vorzugsweise in einem Bereich von 85:15 bis 60:40, besonders bevorzugt in einem Bereich von 82:18 bis 70:30, liegt,
und/oder
- die wärmehärtbare Bindemittelzusammensetzung von Schritt a) als Komponenten zum Härten des Bindemittels durch Reaktion miteinander wenigstens (ii-a) eine, zwei oder mehr, vorzugsweise biobasierte, Kohlenhydratverbindungen und (ii-b) eine oder zwei, vorzugsweise biobasierte, Verbindungen mit zwei oder mehr Aminogruppen, umfassend Hexamethylendiamin und/oder Polylysin, umfasst, wobei die eine oder eine der zwei Verbindungen, die zwei oder mehr Aminogruppen aufweisen, Polylysin ist, wobei das Verhältnis der Masse aller in der Komponente (ii-a) vorhandenen Verbindungen zu der Masse aller in der Komponente (ii-b) vorhandenen Verbindungen in dem Bereich von 10:90 bis 90:10, vorzugsweise in dem Bereich von 20:80 bis 80:20, liegt.

## Revendications

1. Procédé de production d'un composite lignocellulosique ou d'un produit de celui-ci, comprenant au moins les étapes suivantes :
a) préparation d'une feuille formée par
(a-i) préparation d'un mélange comprenant
(i) des particules lignocellulosiques
et
(ii) une composition de liant réticulable à la chaleur comprenant comme composants pour le durcissement du liant via une réaction de l'un avec l'autre au moins
(ii-a) un, deux composés glucidiques ou plus
et
(ii-b) un ou deux composés ayant deux groupes amino ou plus, comprenant l'hexaméthylènediamine et/ou une polylysine
et
(a-ii) formation d'une feuille à partir dudit mélange obtenu à l'étape (a-i),
de sorte que la feuille formée en résulte,
b) dans une unité de chauffage diélectrique et de pressage, compactage et chauffage diélectrique au moins temporairement simultanément de la feuille formée comme résultant de l'étape a) de sorte que la composition de liant réticulable à la chaleur durcisse et le composite lignocellulosique en résulte,
dans lequel la production du composite lignocellulosique fait partie d'une production continue de composites lignocellulosiques,
dans lequel dans l'étape a) et également dans l'étape b) avant le chauffage diélectrique de la feuille formée
- la température maximale au sein de la composition de liant réticulable à la chaleur est inférieure à 80 °C, et/ou
- la température maximale au centre de la feuille formée est inférieure à 70 °C.

2. Procédé selon la revendication 1,
dans lequel le composite lignocellulosique est un panneau lignocellulosique multicouche comprenant au moins deux couches distinguables,
dans lequel le panneau lignocellulosique multicouche est de préférence un panneau ayant au moins une couche centrale ainsi qu'une couche superficielle supérieure et une couche superficielle inférieure, le nombre total de couches étant alors de trois ou plus, dans lequel de préférence au moins une couche centrale comprend une composition de liant durcissable à la chaleur comprenant comme composants pour le durcissement du liant par réaction l'un avec l'autre au moins
(ii-a) un, deux composés glucidiques ou plus
et
(ii-b) un ou deux composés ayant deux groupes amino ou plus, comprenant l'hexaméthylènediamine et/ou une polylysine,
et est
plus préférablement un panneau à trois couches comprenant une couche centrale, une couche superficielle supérieure et une couche superficielle inférieure, de préférence dans lequel au moins la couche centrale comprend une composition de liant durcissable à la chaleur comprenant comme composants pour le durcissement du liant par réaction l'un avec l'autre au moins
(ii-a) un, deux composés glucidiques ou plus
et
(ii-b) un ou deux composés ayant deux groupes amino ou plus, comprenant l'hexaméthylènediamine et/ou une polylysine.

3. Procédé selon l'une quelconque des revendications précédentes, dans lequel le procédé comprend l'une des étapes suivantes ou les deux :
- la préparation en continu d'une feuille formée selon l'étape a), de préférence par diffusion en continu de particules lignocellulosiques et mélange desdites particules avec une composition de liant réticulable à la chaleur
et
- compactage en continu au moins temporairement simultanément et chauffage diélectrique de la feuille formée comme résultant de l'étape a) de sorte que la composition de liant réticulable à la chaleur durcisse et que le composite lignocellulosique en résulte.

4. Procédé selon l'une quelconque des revendications précédentes, dans lequel la feuille formée telle que résultant de l'étape a) est
- introduite dans l'unité de chauffage diélectrique et de pressage mise en œuvre à l'étape b) en moins de 1 minute après la fin de l'étape a), de préférence en moins de 30 secondes, plus préférablement en moins de 10 secondes,
et/ou
- soumise à un compactage et un chauffage diélectrique au moins temporairement simultanément de manière à ce que la composition de liant réticulable à la chaleur durcisse et que le composite lignocellulosique en résulte, la période de temps entre la fin de l'étape a) et le début d'un compactage et d'un chauffage diélectrique au moins temporairement simultanément étant inférieur à 3 minutes, de préférence inférieur à 1 minute, plus préférablement inférieur à 30 secondes, encore plus préférablement inférieur à 10 secondes.

5. Procédé selon l'une quelconque des revendications précédentes, dans lequel l'étape a) est réalisée de telle sorte que la feuille formée résultant de l'étape a) possède, et dans lequel de préférence également l'étape b) est conduite de telle sorte que la feuille formée avant chauffage diélectrique possède :
- une résistance d'adhérence interne de < 0,05 N/mm², de préférence < 0,04 N/mm², et plus préférablement < 0,03 N/mm², mesurée selon la norme EN 319:1993
et/ou
- un module d'élasticité en flexion de < 500 N/mm², de préférence < 400 N/mm², et plus préférablement < 300 N/mm², mesurée selon la norme EN 310:1993
et/ou
- une résistance à la flexion de < 3 N/mm², de préférence < 2 N/mm², et plus préférablement < 1 N/mm², mesurée selon la norme EN 310:1993.

6. Procédé selon l'une quelconque des revendications précédentes, dans lequel l'étape b) est réalisée de sorte que
- la résistance d'adhérence interne du composite lignocellulosique résultant est
d'au moins 0,2 N/mm², de préférence d'au moins 0,25 N/mm² et plus préférablement d'au moins 0,3 N/mm² mesurée selon la norme EN 319:1993
et/ou
au moins 10 fois la résistance d'adhérence interne de la feuille formée telle que résultant de l'étape a)
et/ou
- le module d'élasticité en flexion du composite lignocellulosique résultant est
d'au moins 1200 N/mm², de préférence d'au moins 1500 N/mm² et plus préférablement d'au moins 1800 N/mm² mesurée selon la norme EN 310:1993
et/ou
au moins 10 fois le module d'élasticité en flexion de la feuille formée telle que résultant de l'étape a)
et/ou
- la résistance à la flexion du composite lignocellulosique résultant est
d'au moins 7 N/mm², de préférence d'au moins 10 N/mm² et plus préférablement d'au moins 13 N/mm² mesurée selon la norme EN 310:1993
et/ou
au moins 10 fois la résistance à la flexion de la feuille formée telle que résultant de l'étape a).

7. Procédé selon l'une quelconque des revendications précédentes, dans lequel
- l'étape a) est mise en œuvre de sorte que la conversion desdits
(ii-a) un, deux composés glucidiques ou plus et/ou
(ii-b) un ou deux composés ayant deux groupes amino ou plus, comprenant l'hexaméthylènediamine et/ou une polylysine
après l'étape a) soit inférieure à 0,2, préférablement inférieure à 0,1, plus préférablement inférieure à 0,05, sur la base de la quantité totale respective des composés utilisés pour préparer le mélange dans l'étape (a-i) et/ou
- l'étape b) avant un chauffage diélectrique est conduite de sorte que la conversion desdits
(ii-a) un, deux composés glucidiques ou plus
et/ou
(ii-b) un ou deux composés ayant deux groupes amino ou plus, comprenant l'hexaméthylènediamine et/ou une polylysine
avant un chauffage diélectrique soit inférieure à 0,2, préférablement inférieure à 0,1, plus préférablement inférieure à 0,05, sur la base de la quantité totale respective des composés utilisés pour préparer le mélange à l'étape (a-i)
et/ou
- l'étape b) est conduite de sorte que la conversion desdits
(ii-a) un, deux composés glucidiques ou plus et/ou
(ii-b) un ou deux composés ayant deux groupes amino ou plus, comprenant l'hexaméthylènediamine et/ou une polylysine
après que l'étape b) soit supérieure à 0,5, préférablement supérieure à 0,8, plus préférablement supérieure à 0,9, sur la base de la quantité totale respective des composés utilisés pour la préparation du mélange dans l'étape (a-i).

8. Procédé selon l'une quelconque des revendications précédentes, dans lequel, à l'étape b), la feuille formée est chauffée de manière diélectrique jusqu'à une température maximale au centre de la feuille formée d'au moins 130 °C, de préférence d'au moins 140 °C, plus préférablement d'au moins 150 °C.

9. Procédé selon l'une quelconque des revendications précédentes, dans lequel la feuille formée est compactée à l'étape b) avec des plaques de pressage ayant une température maximale inférieure à 125 °C, de préférence inférieure à 110 °C, au début du compactage.

10. Procédé selon l'une quelconque des revendications précédentes, dans lequel, à l'étape b) de compactage et de chauffage diélectrique au moins temporairement simultanément de la feuille formée, la température maximale au centre de la feuille formée est supérieure d'au moins 5 °C, de préférence d'au moins 10 °C, de préférence d'au moins 20 °C, à la température maximale des plaques de pressage au début du compactage.

11. Procédé selon l'une quelconque des revendications précédentes, comprenant l'étape supplémentaire de :
pré-b) avant l'étape b), de préférence avant l'étape a), de détermination d'un, deux paramètres ou plus du composite lignocellulosique à produire,
dans lequel les conditions de procédé pour l'étape b) sont sélectionnées de sorte que lesdits un, deux paramètres ou plus soient présents dans le composite lignocellulosique résultant de l'étape b),
dans lequel le paramètre est ou deux ou plus desdits paramètres sont choisis dans le groupe constitué par :
- une résistance d'adhérence interne, déterminée selon la norme EN 319:1993-08, d'au moins 0,2 N/mm², de préférence au moins 0,25 N/mm², plus préférablement au moins 0,3 N/mm², et le plus préférablement au moins 0,35 N/mm²
- un gonflement de l'épaisseur après 24 heures dans l'eau à 20 °C, déterminé selon la norme DIN EN 317:1993-08, inférieur à 70 %, de préférence inférieur à 60 %, plus préférablement inférieur à 50 % et le plus préférablement inférieur à 40 %
- un écart de densité maximale dans le composite lignocellulosique, dans lequel dans une section transversale orientée perpendiculairement au plan du composite lignocellulosique la différence entre le maximum de densité du composite lignocellulosique et le minimum de densité dans le cœur du composite lignocellulosique est d'au plus 100 kg/m³.

12. Procédé selon l'une quelconque des revendications précédentes, dans lequel les conditions de procédé à l'étape b) sont choisies de sorte que
- la température maximale au centre de la feuille formée soit atteinte en moins de 200 s, de préférence en moins de 180 s, plus préférablement en moins de 160 s, après le début du chauffage diélectrique de la feuille formée,
et/ou
- la température maximale au centre de la nappe formée est atteinte en moins de 40 s·(d/mm), de préférence en moins de 30 s·(d/mm), plus préférablement en moins de 20 s·(d/mm) après le début du chauffage diélectrique de la feuille formée, où d est l'épaisseur du composite lignocellulosique en mm à l'issue de l'étape b),
et/ou
- plus de 95 %, de préférence plus de 97 %, plus préférablement plus de 99 %, par mole de la quantité totale de composés glucidiques tels que présents dans le composant (ii-a) réagissent et/ou plus de 95 %, de préférence plus de 97 %, plus préférablement de 99 %, par mole de la quantité totale de composés ayant deux groupes amino ou plus tels que présents dans le composant (ii-b) réagissent.

13. Procédé selon l'une quelconque des revendications précédentes, dans lequel la composition de liant durcissable à la chaleur comprend comme composants pour le durcissement du liant par réaction l'un avec l'autre au moins
(ii-a) un, deux ou plus de deux composés glucidiques, de préférence biosourcés, choisis dans le groupe constitué par
- des monosaccharides, des disaccharides, des oligosaccharides, des polysaccharides et un amidon,
de préférence, des monosaccharides choisis dans le groupe constitué par des pentoses et des hexoses encore plus préférablement le, les deux ou plus composés glucidiques, de préférence biosourcés, sont le glucose et/ou le fructose.
et
(ii-b) un ou deux composés, de préférence biosourcés, ayant deux ou plus groupes amino, comprenant de l'hexaméthylènediamine et/ou une polylysine.

14. Procédé selon l'une quelconque des revendications précédentes, dans lequel
- le mélange de l'étape a) comprend (i) des particules lignocellulosiques et (ii) une composition de liant réticulable à la chaleur, dans lequel le rapport massique du poids du contenu solide de la composition de liant réticulable à la chaleur sur le poids des particules lignocellulosiques dans un état de séchage au four est inférieur à 0,18, de préférence inférieur à 0,16, plus préférablement inférieur à 0,15,
et/ou
- la composition de liant réticulable à la chaleur de l'étape a) comprend comme composants pour le durcissement du liant par réaction l'un avec l'autre au moins (ii-a) un, deux ou plus composés glucidiques, de préférence biosourcés, et (ii-b) un ou deux composés, de préférence biosourcés, présentant deux ou plus groupes amino comprenant de l'hexaméthylènediamine et/ou une polylysine, où aucun des composés ayant deux ou plus groupes amino n'est une polylysine, dans lequel le rapport de la masse de l'ensemble des composés présents dans ledit composant (ii-a) sur la masse de tous les composés présents dans ledit composant (ii-b) est dans la plage allant de 90:10 à 50:50, de préférence dans une plage allant de 85:15 à 60:40, plus préférablement dans une plage allant de 82:18 à 70:30,
et/ou
- la composition de liant durcissable à la chaleur de l'étape a) comprend comme composants pour le durcissement du liant par réaction l'un avec l'autre au moins (ii-a) un, deux ou plus composés glucidiques, de préférence biosourcés et (ii-b) un ou deux composés, de préférence biosourcés, ayant deux ou plus groupes amino comprenant l'hexaméthylènediamine et/ou une polylysine, où l'un ou l'un des deux composés ayant deux ou plus groupes amino est une polylysine, dans lequel le rapport de la masse de tous les composés présents dans ledit composant (ii-a) sur la masse de tous les composés présents dans ledit composant (ii-b) est dans la plage allant de 10:90 à 90:10, de préférence dans une plage allant de 20:80 à 80:20.
